Europäisches Patentamt

European Patent Office

Office européen des brevets

(19)

(11) EP 0 526 271 B1

(12) FASCICULE DE BREVET EUROPEEN

(45) Date de publication et mention
de la délivrance du brevet:
**27.08.1997 Bulletin 1997/35**

(51) Int Cl.6: **G01N 27/26**

(21) Numéro de dépôt: **92401777.5**

(22) Date de dépôt: **24.06.1992**

(54) **Dispositif permettant l'étalement d'un ou plusieurs réactifs sur un gel**

Vorrichtung zum Aufstreichen von einer/oder mehreren Reagenzien auf ein Gel

Apparatus allowing the spreading of one or more reagents on a gel

(84) Etats contractants désignés:
**AT BE CH DE DK ES FR GB GR IT LI LU MC NL
PT SE**

(30) Priorité: **28.06.1991 FR 9108122**

(43) Date de publication de la demande:
**03.02.1993 Bulletin 1993/05**

(73) Titulaire: **SEBIA
F-92130 Issy-Les-Moulineaux (FR)**

(72) Inventeur: **Bellon, Franck
F-91160 Longjumeau (FR)**

(74) Mandataire: **Desaix, Anne et al
Ernest Gutmann - Yves Plasseraud S.A.
3, rue Chauveau-Lagarde
75008 Paris (FR)**

(56) Documents cités:
**EP-A- 0 043 287        WO-A-85/04256
FR-A- 2 538 897        US-A- 4 919 784**

## Description

L'invention concerne un dispositif permettant l'étalement d'un ou plusieurs réactifs sur un gel, notamment gel d'électrophorèse ou d'immunofixation.

L'invention concerne également un procédé mettant en oeuvre le susdit dispositif.

Les techniques d'électrophorèse ou d'immunofixation sont habituellement suivies, après la migration, d'une étape d'incubation du gel avec un réactif pour mettre en évidence et éventuellement quantifier les fractions protéiques séparées lors de l'électrophorèse.

Le cas le plus classique est la coloration de l'ensemble de fractions protéiques séparées par électrophorèse au moyen d'un colorant venant se fixer spécifiquement sur celles-ci. Dans ce cas, le réactif utilisé (le colorant) est un produit généralement bon marché dont on peut préparer une solution en quantité suffisante pour y immerger totalement le gel.

Cependant, cette méthode n'est pas envisageable dans le cas où il est nécessaire d'utiliser de faibles quantités de réactif, lorsqu'il s'agit d'un réactif coûteux, ou lorsque sur un même gel, on veut réaliser des incubations sur des zones discrètes avec des réactifs différents.

Ces éventualités concernent par exemple le dosage des isoenzymes contenues dans un sérum (isoLDH, isoCK, isophosphatase) où l'on incube le gel avec un substrat (produit coûteux) de ces enzymes aboutissant à la formation d'un produit coloré ou fluorescent qui permette la quantification par densitométrie.

Le cas où il est nécessaire d'effectuer, sur un même gel, des incubations avec des réactifs différents est constitué par exemple par l'immunofixation où différentes zones discrètes du gel doivent être incubées avec différents antisérums de spécificité différente (réactif coûteux) et un fixateur de protéines.

Dans tous ces cas, on cherche à utiliser une quantité minimum de réactif.

Dans la mise en oeuvre des procédés cités ci-dessus, on imprègne une feuille de papier filtre découpée à la dimension du gel, avec une quantité juste nécessaire de réactif pour qu'elle soit entièrement humidifiée et on l'applique ensuite sur la surface du gel.

Dans le cas où différents réactifs sont éventuellement utilisés sur des zones distinctes d'un même gel, on découpe autant de bandes de papier filtre que de zones à recouvrir par les différents réactifs, on imprègne ces différentes bandes des différents réactifs avant de les appliquer sur les différentes zones où l'incubation doit avoir lieu.

Ce procédé présente un certain nombre d'inconvénients. Il faut en effet éviter d'emprisonner des bulles d'air entre le gel et la feuille de papier filtre imprégnée de réactif, car, au niveau des bulles d'air, la réaction n'aurait pas lieu par défaut de réactif sur le gel. Le papier étant opaque, il est parfois difficile de détecter la présence de ces bulles d'air.

Par ailleurs, pendant la réaction d'incubation, une partie des protéines que l'on veut révéler peut s'adsorber sur le papier, ou plus simplement s'absorber par pompage sur ce dernier.

Si un temps d'incubation prolongé est nécessaire (30' à 1 heure), ce phénomène s'accentue du fait que, au cours de l'incubation, se produit une évaporation à partir de la surface libre du papier. Celui-ci ayant tendance, par capillarité, à conserver un taux d'humidification constant, il se crée un flux de liquide, du gel vers le papier, avec entraînement des fractions protéiques à doser initialement contenues dans le gel. Ceci entraîne une perte de sensibilité de la révélation sur le gel et cette absorption n'étant pas forcément homogène, la quantification par densitométrie des fractions révélées présente des risques d'erreurs.

De plus, et surtout, ce procédé est manuel et très laborieux et donc difficile à mettre en oeuvre en analyse clinique de routine, et, en pratique courante, est abandonné.

Un autre procédé également utilisé consiste à utiliser un masque constitué d'une feuille de plastique souple, de préférence de nature hydrophobe, ayant approximativement le même contour extérieur que le gel et présentant une ou plusieurs ouverture(s) indépendante(s) de forme rectangulaire. Ce masque, une fois appliqué sur le gel, délimite la ou les zones destinées à recevoir le ou les réactifs.

L'utilisation d'un tel masque présente également un certain nombre d'inconvénients.

Après migration électrophorétique, il arrive fréquemment qu'une partie de liquide exsude en surface du gel. Cette exsudation est principalement créée par le flux d'électroendosmose.

Avant d'appliquer le masque sur le gel, il est nécessaire d'éliminer ce liquide en excès par un pompage au moyen d'un papier filtre fin, car, si du liquide est encore présent sur le gel, il empêche d'assurer une bonne adhérence du masque sur le gel, ainsi qu'une bonne étanchéité à la périphérie de la ou des zone(s) délimitée(s).

En plus de la manipulation supplémentaire de pompage, le papier filtre risque d'entraîner une partie des protéines du gel et de fausser le résultat.

Par ailleurs, le gel ou les réactifs utilisés peuvent, dans certains cas, contenir des agents tensioactifs qui vont faciliter l'insertion de liquide entre le gel et le masque et, dans ces conditions, même après élimination de l'excès de liquide qui a exsudé du gel en fin de migration, le masque risque de ne pas assurer l'étanchéité requise.

Avec ce type de masque, il est important que la totalité de la surface du masque soit parfaitement appliquée sur le gel. Il faut éviter d'emprisonner des bulles d'air entre le gel et le masque plastique lors de son positionnement sur le gel. Dans le cas contraire, on risque d'avoir soit une fuite de réactif sous le masque, soit un mélange de réactifs adjacents.

La présente invention a pour objet de proposer un dispositif qui remédie en grande partie aux inconvénients précédents.

La présente invention a pour objet un dispositif permettant le dépôt, l'étalement et l'incubation d'un réactif sur un gel, dans lequel on utilise des quantités de réactif du même ordre de grandeur que les dispositifs classiques, le dispositif de l'invention étant cependant dépourvu des inconvénients des dispositifs classiques.

La présente invention a également pour objet de proposer un dispositif permettant le dépôt, l'étalement et l'incubation d'un réactif sur un gel, dans lequel on peut incuber des zones différentes avec des réactifs respectivement différents, sans qu'il y ait mélange de réactifs.

La présente invention a pour but de proposer un dispositif permettant le dépôt, l'étalement et l'incubation d'un réactif sur un gel, dans lequel les manipulations sont limitées au minimum.

La présente invention a pour objet de proposer un dispositif de dépôt, d'étalement et d'incubation d'un réactif sur un gel, permettant d'obtenir des résultats exacts quant à la quantification des substances fractionnées dans le gel.

La présente invention a pour objet de proposer un dispositif de dépôt, d'étalement et d'incubation d'un réactif sur un gel, susceptible d'être automatisé.

L'invention a donc pour objet un masque rigide destiné au dépôt, à l'étalement et à l'incubation d'un ou plusieurs liquide(s) sur un gel (de surface totale Sg) selon une ou plusieurs zone(s) déterminée(s) du gel, ci-après désignée(s) par "surface d'incubation Si", ce masque comportant :

- une surface supérieure et une surface inférieure, la distance séparant la surface inférieure et la surface supérieure constituant l'épaisseur du masque,
- au moins un orifice destiné à permettre le dépôt et l'étalement du liquide sur la surface d'incubation Si du gel, et constitué par un évidement traversant le masque sur la totalité de son épaisseur, et/ou
- au moins une fente traversant le masque sur la totalité de son épaisseur et destinée à permettre le retrait de l'excès de liquide présent sur la surface d'incubation Si du gel, cette fente étant située dans la partie du masque dont la projection se trouve soit dans la surface d'incubation Si, soit en dehors de la surface d'incubation Si,
- des moyens de positionnement du masque, destinés à maintenir sa surface inférieure à une distance déterminée de la surface Sg du gel à proximité duquel le masque serait amené, dans des conditions telles qu'ils empêchent le contact entre la surface inférieure du masque et la surface d'incubation Si, lorsque le masque est à proximité du gel et que le liquide est déposé sur le gel, cette surface inférieure étant en outre telle qu'elle ne comporte, sur au moins une partie d'elle-même désignée par Sm, aucune irrégularité à sa surface susceptible d'être un obstacle à l'étalement du liquide sur la surface d'incubation Si, la surface Sm étant délimitée par rapport au reste de la surface inférieure, de telle sorte que le liquide ne puisse s'étaler que sur la surface Si du gel en projection de Sm, cette projection de Sm sur le gel étant supérieure ou égale à la surface d'incubation Si du gel.

L'invention permet avantageusement de placer le masque au dessus du gel comportant la ou les surfaces d'incubation. Elle permet aussi de placer le masque au dessous du gel d'incubation. Dans chaque cas, la surface de dépôt, d'étalement et d'incubation des réactifs sur le gel est située à proximité de la surface inférieure du masque, cette dernière n'étant toutefois pas en contact avec la surface d'incubation Si.

Le liquide est généralement le réactif destiné à révéler les protéines qui ont préalablement été déposées sur le gel. Le réactif est introduit par l'évidement défini ci-dessus, que l'on désignera également par "orifice de dépôt".

La surface d'incubation Si est la zone du gel qu'il est impératif de recouvrir avec le (ou les) réactif(s) pour que la révélation des protéines se fasse. On désigne par Li la longueur de la surface d'incubation, c'est-à-dire la dimension de la surface d'incubation parallèle à la direction de migration électrophorétique.

Dans le cas d'un seul réactif, Si peut être égal à la surface Sg ou bien Si peut être une partie de Sg incluant néanmoins l'ensemble des pistes de migration, c'est-à-dire les zones du gel où les séparations électrophorétiques se sont produites.

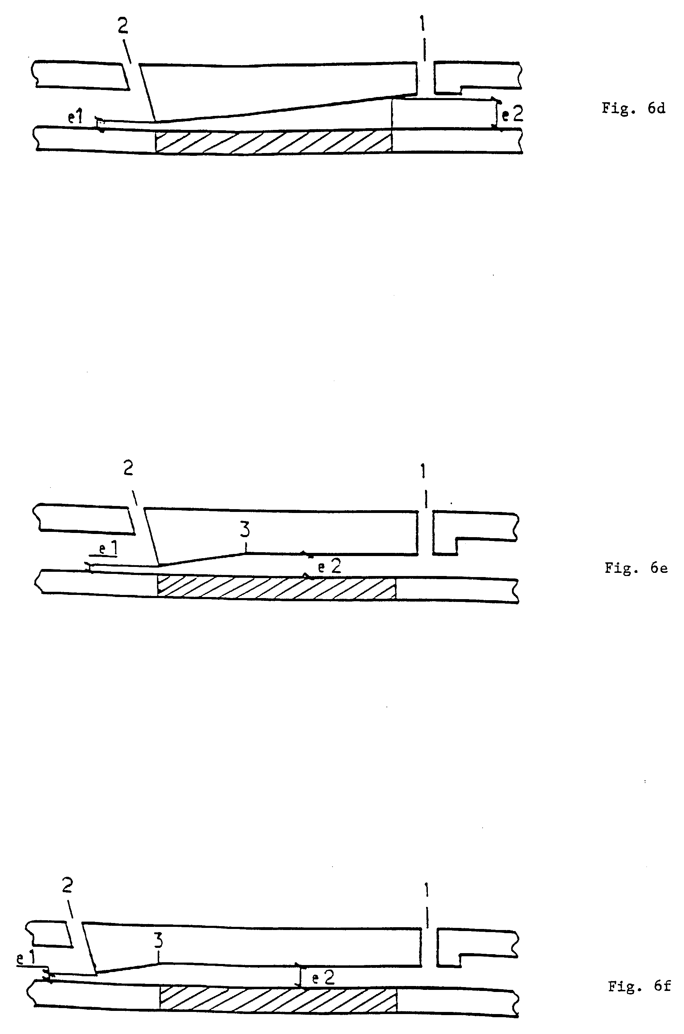

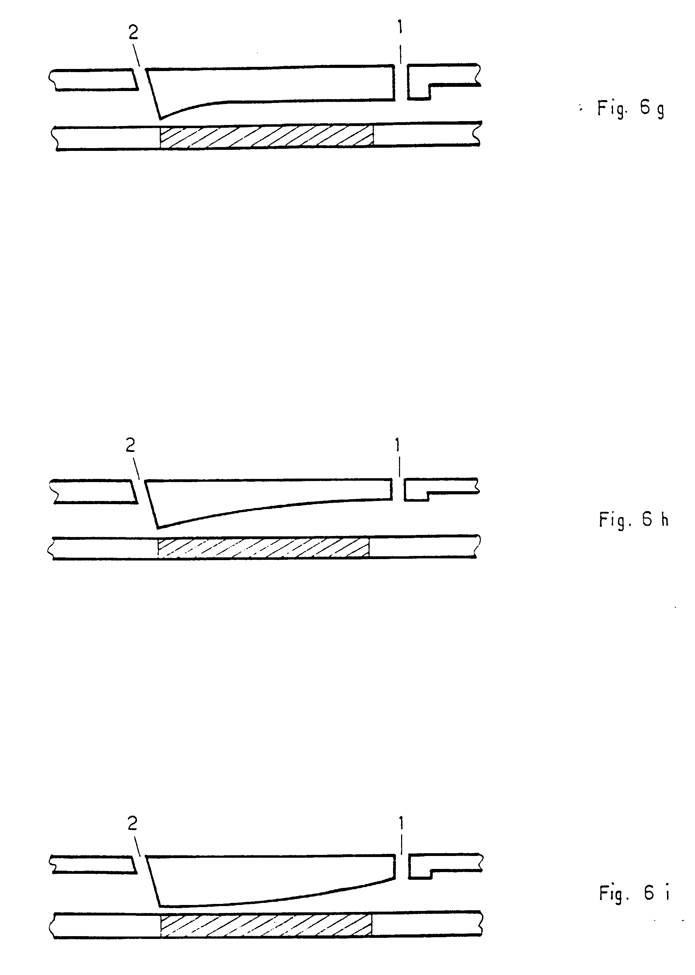

Il faut cependant noter que la zone effectivement recouverte par le réactif peut être supérieure à la surface Si (cf. Figure 6f).

Dans le cas de l'incubation avec des réactifs différents, ou éventuellement avec un même réactif, mais sur des zones distinctes du gel incluant par exemple chacune des différentes pistes de migration, on définit la surface d'incubation par $Si_1$, $Si_2$, $Si_n$, n étant un nombre entier égal ou supérieur à 2.

On désigne par "Sm" la surface inférieure utile du masque, qui ne présente aucune irrégularité à sa surface susceptible de constituer un obstacle à l'étalement du réactif sur la surface d'incubation Si, et notamment ni aspérité concave, ni aspérité convexe, c'est-à-dire une surface sans arête, ni décrochement, qui serait susceptible d'empêcher le réactif de s'étaler sur la surface Si, cette surface Sm étant plane ou incurvée ou comporte des éléments plans ou incurvés.

La surface Sm peut comporter la fente et l'orifice de dépôt définis ci-dessus.

De façon avantageuse, la surface Sm est plane ou incurvée, notamment cylindrique, de grand rayon par rapport aux dimensions de Si.

La surface Sm peut également être composée de facettes élémentaires, planes ou incurvées, notamment cylindriques, raccordées entre elles, ces différentes facettes, ainsi que leurs raccords, étant tels qu'il n'y a pas obstacle à l'étalement du liquide sur la surface d'incubation Si.

La longueur Lm est la dimension de la surface Sm parallèle à la direction de migration électrophorétique. La largeur de la surface Sm, dont question ci-après, correspond à la dimension perpendiculaire à la longueur définie ci-dessus.

Lorsque cette surface Sm présentant un évidement permettant le dépôt d'un réactif est positionnée à proximité de la surface d'un gel, elle doit permettre de maintenir par capillarité, entre elle-même et la surface Si à incuber, un réactif introduit par l'évidement.

Ce liquide déposé peut ensuite s'étaler entre Sm et la surface du gel jusqu'à ce qu'il rencontre une discontinuité, qui peut être soit le bord du gel, soit le bord du masque, soit une rainure, soit un dénivelé concave, et qui délimite la surface Sm.

Par étalement du liquide, on entend la progression ou déplacement du liquide sur la surface Si, due aux seules forces de capillarité (résultant de la proximité de la surface inférieure du masque et de la surface d'incubation Si) et éventuellement aux forces de gravité.

Dans le cas où plusieurs réactifs doivent être étalés, on définit les surfaces de masque par $Sm_1$, $Sm_2$, $Sm_n$, n étant un nombre entier égal ou supérieur à 2. comme autant de surfaces planes, incurvées, notamment cylindriques, coplanaires, cocylindriques ou composées de facettes élémentaires planes ou incurvées, notamment cylindriques, ces différentes facettes élémentaires étant raccordées entre elles.

Les surface $Sm_1$ à $Sm_n$ sont délimitées par des dénivelés concaves ou des rainures.

En ce qui concerne la fente, elle peut être située dans le masque, de telle sorte que sa projection se trouve dans la surface d'incubation Si, on en dehors de la surface d'incubation Si, mais adjacente à l'un des bords de ladite surface d'incubation Si, ou adjacente à l'un des bords de la surface effectivement recouverte par le réactif. De façon avantageuse, la fente est adjacente au bord de la surface Si opposé au voisinage de l'orifice de dépôt.

La fente est avantageusement située en dehors de la surface d'incubation Si. En effet, si elle est située dans la surface d'incubation Si, il faut qu'elle ait des dimensions telles qu'elle ne soit pas susceptible d'être un obstacle à l'étalement du liquide. Dans ces conditions, la fente est étroite (inférieure ou égale à environ 1 mm) et permet de maintenir par capillarité un excès de réactif.

La topographie de la surface supérieure est un paramètre qui peut varier. Cependant, la surface supérieure est avantageusement plane. Dans la suite du texte, pour simplification de description, on considérera que la surface supérieure est plane, et que la surface inférieure utile Sm, de longueur Lm

- soit est sensiblement parallèle à la surface supérieure,
- soit forme avec la surface supérieure, lorsque celle-ci est utilisée horizontalement, un angle inférieur à environ 3°, ou

- soit est sensiblement parallèle à la surface supérieure sur une partie de sa longueur Lm et sur le reste de sa longueur Lm, dans le prolongement de la surface parallèle, forme un angle avec la surface supérieure, cet angle étant tel qu'il n'est pas susceptible d'empêcher l'étalement du liquide sur la surface d'incubation Si.

De façon avantageuse, dans le troisième cas évoqué ci-dessus relatif à la position respective de la surface inférieure par rapport à la surface supérieure, la surface inférieure est avantageusement sensiblement parallèle à la surface supérieure sur une partie de sa longueur Lm qui correspond à la longueur de la surface d'incubation Li. Le prolongement de cette surface parallèle par une partie formant un angle avec la surface supérieure est avantageusement tel que l'angle entre la surface inférieure et le gel soit un angle aigu d'environ 1° à environ 90°, ce qui va favoriser l'élimination du réactif en excès, lorsque cet angle est au voisinage de la fente (cf. figure 6d).

La surface Sm du masque peut également être incurvée, avantageusement cylindrique.

Quand la surface du masque est constituée par une surface cylindrique, il faut que son diamètre soit supérieur ou égal au carré de Li.

Lorsque la surface cylindrique ne concerne qu'une fraction f de la longueur d'incubation Li, le diamètre doit être supérieur ou égal au carré de la longueur fxLi.

L'invention concerne également un masque destiné au dépôt, à l'étalement et à l'incubation d'un ou plusieurs liquides, dans lequel la surface inférieure du masque comporte au moins deux dénivelés ou deux rainures, les dénivelés ou rainures étant espacés les uns des autres pour délimiter au moins une partie du masque Sm, laquelle ne comporte aucune irrégularité à sa surface, susceptible d'être un obstacle à l'étalement du liquide sur une surface d'incubation Si, et dont la projection sur un gel est égale ou supérieure à la surface d'incubation Si du gel sur laquelle le liquide peut être étalé, les dénivelés et les rainures ayant une hauteur suffisante pour que le liquide puisse être maintenu par capillarité sur la susdite surface d'incubation Si du gel.

Dans ce mode de réalisation de l'invention, la partie Sm du masque n'est limitée ni par le bord du gel, ni par le bord du masque, mais par au moins deux dénivelés ou deux rainures, qui ont une hauteur suffisante, et éventuellement une largeur suffisante, pour que le liquide puisse être maintenu par capillarité sur la susdite surface d'incubation Si du gel et ne pas dépasser les limites de la surface d'incubation Si du gel ou les limites de la projection de la surface Sm sur le gel.

Les rainures peuvent traverser la totalité du masque, et on les désignera par "rainures creuses". Pour que les rainures creuses maintiennent le liquide par capillarité, il faut que leurs dimensions soient telles qu'elles ne puissent pas servir de réservoir avec un rassemblement éventuel du liquide à l'intérieur dudit réservoir, et donc qu'elles aient avantageusement une largeur supérieure ou égale à 2 mm, et une hauteur supérieure ou égale à 0,2 mm, avantageusement 0,5 mm et de préférence 1 mm.

Les dénivelés ou rainures encadrent une piste de migration et sont avantageusement rectilignes.

En général, les pistes de migration ont la forme de bande rectangulaire, ayant par exemple les dimensions suivantes : longueur d'environ 10 mm à environ 100 mm, largeur d'environ 2 mm à environ 80 mm. Lorsqu'une piste de migration est encadrée par deux rainures, les deux autres bords de la piste de migration peuvent être constitués par une partie de deux des bords du gel ou de deux des bords du masque, ou par deux autres rainures perpendiculaires aux deux autres rainures précédemment définies.

Lorsqu'il y a plusieurs pistes de migration, celles-ci sont avantageusement telles que leurs bords de plus petite dimension sont dans un même alignement.

L'invention a également pour objet un masque destiné au dépôt, à l'étalement et à l'incubation d'un seul liquide comportant un seul évidement traversant le masque, destiné à permettre le dépôt, l'étalement et l'incubation d'un seul liquide sur un gel selon une surface d'incubation Si du gel.

Ce mode de réalisation concerne le cas où on veut déposer, étaler et incuber un seul liquide.

Dans ce cas, on envisage un seul évidement pour effectuer le dépôt du liquide.

Cet évidement peut avoir la forme d'une fente allongée, ayant par exemple les dimensions suivantes : longueur 50 mm, largeur 1,5 mm.

L'invention concerne également un masque destiné au dépôt, à l'étalement et à l'incubation

- de plusieurs liquides sur un gel selon des surfaces d'incubation respectives $Si_1$ à $Si_n$ ou
- d'un liquide sur un gel selon plusieurs surfaces d'incubation $Si_1$ à $Si_n$, n variant de 2 à 50,

ce masque étant tel que sa surface inférieure comporte des dénivelés ou des rainures, les dénivelés ou rainures étant espacés les uns des autres pour délimiter plusieurs parties du masque $Sm_1$ à $Sm_n$, n variant de 2 à 50, ne comportant aucune irrégularité à leur surface, susceptible d'être un obstacle à l'étalement du liquide sur les surfaces $Si_1$ à $Si_n$, et dont la projection sur le gel est supérieure ou égale aux surfaces d'incubation $Si_1$ à $Si_n$ du gel, sur lesquelles le liquide doit être étalé, les dénivelés et les rainures ayant une hauteur suffisante pour que le liquide puisse être maintenu par capillarité sur les susdites surfaces d'incubation $Si_1$ à $Si_n$ du gel.

Ce cas correspond au dépôt de plusieurs liquides sur des surfaces d'incubation respectives ou d'un liquide sur plusieurs surfaces d'incubation $Si_1$ à $Si_n$.

Pour assurer le dépôt, l'étalement et l'incubation du liquide sur la surface Si, on peut envisager que l'orifice qui sert au dépôt ait un volume tel qu'il soit susceptible de constituer un réservoir présentant une capacité de rétention du liquide en excès pour assurer l'étalement du liquide sur la surface d'incubation Si, même si en cours d'incubation, une légère quantité de réactif s'est évaporée (cf. Figure 6a).

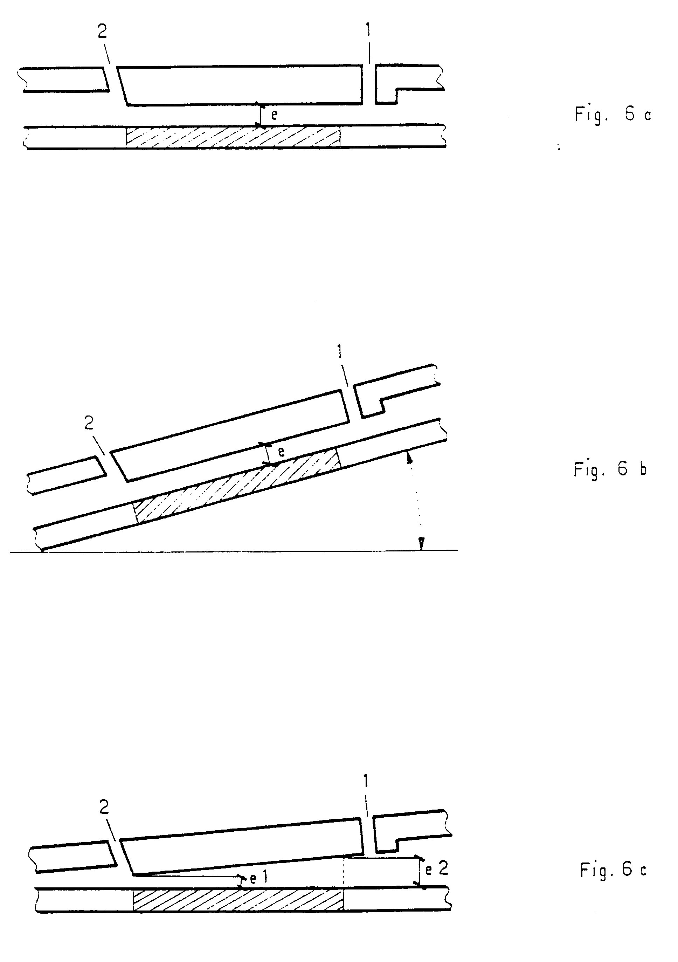

On peut procéder autrement pour assurer le dépôt, l'étalement et l'incubation du liquide sur la surface d'incubation Si. En effet, si le gel et le masque sont maintenus sensiblement parallèles entre eux, il peut être utile d'incliner l'ensemble gel et masque selon une rotation autour d'un axe sensiblement parallèle à l'un des bords du gel ou à l'un des bords du masque, de telle sorte que le liquide descende par gravité en direction de la surface d'incubation Si qui doit être recouverte (cf. Figure 6b).

On peut également, afin d'assurer le dépôt, l'étalement et l'incubation du liquide, maintenir le gel en position sensiblement horizontale et incliner légèrement le masque par rotation autour d'un axe parallèle à l'un des bords du masque ou à l'un des bords du gel, et situé au voisinage du bord de la surface d'incubation de telle sorte que la distance entre le gel et le masque au niveau de cet axe soit plus faible que la distance entre le gel et le masque dans la zone opposée à cet axe (cf. Figure 6c).

Etant donné que les forces de capillarité sont plus importantes au voisinage de cet axe, le liquide se répartit par capillarité sur la surface d'incubation Si.

L'invention a également pour objet un masque tel que décrit précédemment dans lequel l'orifice de dépôt a un volume tel qu'il est susceptible de constituer un réservoir présentant une capacité de rétention du liquide en excès pour assurer l'étalement du liquide sur la surface d'incubation Si.

Selon un mode de réalisation du masque de l'invention, l'orifice de dépôt a une forme allongée ou une forme circulaire, de préférence allongée et présente avantageusement une largeur d'environ 1 mm à environ 2 mm, notamment 1,5 mm, et une longueur d'environ 4 mm à environ 80 mm, notamment 5 mm.

Selon un autre mode de réalisation, l'évidement du masque est susceptible de contenir par capillarité un volume de liquide au moins égal à V/10, V étant le volume existant entre la surface d'incubation Si et le masque, lorsque le masque et le gel sont positionnés respectivement l'un par rapport à l'autre dans des conditions telles que le liquide déposé dans l'évidement s'étale sur le gel.

Selon un autre mode de réalisation de l'invention, l'orifice de dépôt est situé au voisinage du milieu de la partie Sm du masque et a la forme d'une fente allongée, dont les dimensions sont telles qu'elle ne peut pas empêcher le liquide de se déposer sur la surface d'incubation Si, et dont la longueur est avantageusement la longueur de la surface d'incubation Si, la largeur avantageusement d'environ 1 mm à environ 2 mm, cet orifice de dépôt étant également susceptible d'assurer la fonction de la fente destinée à permettre le retrait de l'excès de liquide qui est étalé sur la surface Si.

Selon un autre mode de réalisation de l'invention, la fente destinée à permettre le retrait du liquide en excès est sensiblement parallèle à la largeur de la surface d'incubation et est positionnée de façon adjacente au bord de la surface d'incubation qui est opposé au voisinage de l'orifice de dépôt, et a avantageusement une largeur d'environ 1 mm à environ 4 mm, notamment 2 mm, et une longueur supérieure ou égale à la largeur de la surface Si, et la surface périphérique interne de la fente est perpendiculaire à la surface du masque et de préférence inclinée par rapport à la direction perpendiculaire de la surface du masque pour permettre la mise en contact directe des moyens permettant le retrait du liquide en excès avec ledit liquide en excès.

Pour fixer les idées, l'inclinaison de la surface périphérique interne de la fente par rapport à la direction perpendiculaire à la surface du masque peut être d'environ 30°.

Selon un autre mode de réalisation de l'invention, l'épaisseur du masque est d'environ 1 mm à environ 20 mm, notamment d'environ 2 mm à environ 10 mm, et les dénivelés ont une hauteur au moins égale à 0,2 mm, avantageusement d'environ 0,5 mm à environ 20 mm, ou les rainures ont une largeur suffisante pour que, pendant l'incubation, chaque liquide maintenu par capillarité entre le masque et une surface d'incubation Si ne se mélange pas avec les liquides maintenus dans les surfaces d'incubation qui sont directement adjacentes à Si, la largeur des rainures étant d'environ 1 mm à environ 10 mm.

Selon un autre mode de réalisation de l'invention, le masque comporte plusieurs parties Sm de masque, avantageusement d'environ 6 à environ 50, chacune des parties Sm comportant un orifice de dépôt, de préférence situé dans la partie de Sm dont la projection sur le gel correspond à la partie anodique du gel, ce masque comportant une fente unique destinée à permettre le retrait de l'excès de liquide qui est étalé sur les surfaces Si du gel, cette fente s'étendant de préférence perpendiculairement par rapport à la plus grande des dimensions des parties Sm du masque, et étant de préférence située dans le masque à une position telle que sa projection soit dans la région cathodique du gel.

Les parties Sm sont avantageusement constituées par des rectangles, ayant par exemple une longueur supérieure ou égale à environ 10 mm à environ 80 mm et une largeur d'environ 2 mm à environ 80 mm.

L'invention a également pour objet un masque tel que décrit précédemment comportant une seule partie Sm, dont les dimensions sont supérieures ou égales à celles de Si, et comportant au voisinage de l'une de ses extrémités un évidement ayant une forme allongée, et dont la longueur correspond de préférence à la largeur de la surface d'incubation Si et comportant également au voisinage de l'autre extrémité, une fente destinée au retrait de l'excès de liquide, cette fente ayant avantageusement, comme longueur, au moins la largeur de Si.

L'invention concerne également un masque comportant des moyens de positionnement du masque par rapport au gel tels que la distance minimum entre le gel et la partie Sm du masque soit supérieure ou égale à 0,1 mm, et la valeur de la distance maximum soit d'environ 0,5 mm à environ 2 mm, notamment 1 mm.

Ces moyens peuvent être constitués par tout moyen de fixation, par exemple vis etc... On peut également envisager que le masque comporte, à sa périphérie des butées susceptibles de reposer sur le gel, ces butées étant positionnées et ayant des dimensions telles qu'il n'y ait pas de contact entre la partie Sm du masque et la surface d'incubation Si.

Selon un autre mode de réalisation avantageux de l'invention, la surface supérieure du masque et sa surface inférieure ne sont pas parallèles entre elles, mais forment un angle tel que, lorsque la surface supérieure du masque est positionnée parallèlement à la surface du gel, la distance minimum entre le gel et le masque soit supérieure ou égale à environ 0,1 mm et la valeur de la distance maximum soit d'environ 0,5 mm à environ 2 mm, notamment 1 mm.

L'invention a aussi pour objet un masque réalisé de façon telle que l'orifice de dépôt et d'étalement du liquide coïncide avec (est identique à) la fente destinée à permettre le retrait de l'excès de liquide. Cette réalisation permet notamment d'envisager une automatisation plus aisée du dispositif de dépôt, d'étalement et d'incubation d'un ou plusieurs réactifs sur un gel.

L'orifice de dépôt (orifice (1)) coïncidant dans ce mode de réalisation avec la fente d'élimination des réactifs, est relié au moyen de tuyaux et d'une vanne multicanaux, aux différentes solutions de réactif à introduire ainsi qu'à un flacon "rejet" destiné à recueillir les réactifs éliminés. Ces solutions sont véhiculées dans un sens ou dans l'autre au moyen d'une pompe.

Dans ces conditions la fente distincte de l'orifice (1), précédemment décrite et permettant après la phase d'incubation, l'élimination du réactif par pompage au moyen d'un papier filtre introduit à ce niveau, n'est plus nécessaire et est supprimée.

Dans ces conditions l'orifice (1) peut avoir différentes formes, de préférence avoir une forme circulaire de petit diamètre avantageusement inférieur à 2mm et de préférence inférieur à 1mm.

Selon ce mode de réalisation dans lequel l'orifice de dépôt sert également à éliminer les réactifs après incubation, il est avantageux que :

1) la périphérie de l'orifice (1) soit la partie de la surface Sm du masque, susceptible d'être en contact avec les diverses solutions de réactifs, qui soit la plus proche de la surface du gel sans toutefois venir à son contact (écartement minimum supérieur ou égal à 0,1mm) ;

2) au fur et à mesure que l'on s'éloigne de cet orifice sur la surface Sm, que la distance gel masque augmente où à la limite reste constante.

Dans le cas où le réactif introduit possède des forces de cohésion analogues à celles de l'eau la distance maximum entre la surface du gel et celle du masque ne doit pas excéder 2mm (cet écartement maximum pouvant être légèrement augmenté ou diminué si les forces de cohésion du liquide introduit sont respectivement augmentées ou diminuées).

Etant donné la planéité du gel, les contraintes d'écartement minimum de 0,1mm au niveau de l'orifice (1) et d'autre part d'écartement maximum d'environ 2mm à la périphérie de la zone d'incubation Si, définissent la forme de la surface Sm du masque qui se présente par exemple sous forme pyramidale centrée ou excentrée à base rectangulaire ou carrée, ou encore sous forme d'une surface de révolution conique, centrée ou excentrée à base circulaire ou elliptique et dont le sommet correspond à l'orifice (1).

Les angles au sommet de cette pyramide ou de cette surface de révolution conique dépendent des dimensions de la surface Si du gel à incuber.

Par exemple pour une surface d'incubation circulaire de 90mm de diamètre l'angle au sommet d'un masque ayant une surface Sm de forme conique centrée à base circulaire doit se situer entre 175 et 179°.

Dans ces conditions lors de l'introduction d'un réactif amené à l'orifice (1) au moyen de tuyaux et d'une pompe, le liquide va se répartir à la surface du gel à partir de l'orifice (1), les contours successifs des zones du gel recouvertes par le réactif étant les courbes de niveau d'équidistance de la surface Sm par rapport à la surface du gel qui est maintenu en position horizontale. Dans le cas où la surface du masque est une surface de révolution conique centrée à base circulaire ce seront des cercles concentriques centrés sur l'orifice (1).

Il convient d'introduire les différents réactifs exempts de bulle d'air (car à l'emplacement d'une bulle d'air le réactif n'étant pas en contact avec le gel l'incubation ne se ferait pas à ce niveau là) et à des débits suffisamment lents de l'ordre de (50 à 1000µl/s) afin d'éviter d'endommager le gel en regard de l'orifice (1) par suite de l'application de pressions hydrauliques incompatibles avec la tenue mécanique du gel.

Après la phase d'incubation on récupère le réactif par l'orifice (1) au moyen de la pompe. L'orifice (1) étant la surface sur la zone la plus proche du gel c'est à ce niveau que les forces de capillarité pour le liquide introduit entre le masque et le gel seront maximum et au fur et à mesure de l'aspiration du liquide celui-ci va se rassembler dans cette zone d'écartement gel-masque minimum. Lors de cette opération, les contours successifs des zones du gel encore recouvertes de liquide seront en ordre inverse les mêmes que ceux obtenus lors de l'introduction et correspondent aux courbes de niveau d'équidistance entre le masque et le gel. Dans la mesure où l'aspiration du liquide est suffisamment lente (50µl à 1000µl/s) pour ne pas rompre la cohésion du liquide (et cela surtout en fin d'aspiration) celui-ci sera aspiré de façon continue et pratiquement totale.

Pour que l'élimination du réactif préalablement introduit soit la plus complète possible il importe :

1) que le diamètre de l'orifice (1) affleurant à la surface du masque soit de petite dimension (diamètre de l'ordre du millimètre) ;
2) qu'il soit à faible distance de la surface du gel de 0,1 à 1mm et de préférence de 0,2 à 0,6mm ;
3) dans le but de maintenir la cohésion de la dernière goutte qui va être aspirée et il est préférable que la surface du masque qui entoure la périphérie de l'orifice (1) présente un méplat parallèle à la surface du gel sur une zone de 10 à 200mm$^2$ de préférence de 25 à 100mm$^2$.

Dans ce mode de réalisation on peut envisager de placer le masque en dessous de la surface du gel.

Le gel étant maintenu par un moyen approprié (par exemple par aspiration sous vide au moyen d'une plaque poreuse) en position horizontale face libre du gel dirigée vers le bas le masque se trouve alors en dessous et le fonctionnement de l'ensemble est analogue à celui précédemment décrit.

Il apparaît néanmoins dans ces conditions que l'élimination de la dernière goutte de liquide préalablement introduit est facilitée puisqu'elle a en plus tendance par gravité à se rassembler au niveau de l'orifice (1) d'aspiration.

Dans le cas où un seul réactif est introduit selon ce procédé sur un même gel il convient de calibrer le volume de réactif délivré par la pompe pour recouvrir la zone Si du gel devant être incubée.

Si la surface Si est égale à la surface du gel au delà du volume compris entre la surface du gel et la surface du masque en regard, un excès de réactif sera encore maintenu. Un excès de liquide supplémentaire peut néanmoins échapper aux forces de capillarité sans toutefois entraîner le reste de la solution compris entre les deux surfaces gel et masque. Il suffit dans ces conditions d'avoir un système de récupération par exemple une gouttière à la périphérie du masque avec un système d'évacuation de cet excès de réactif, pour que cela ne nuise en rien au processus de révélation.

Dans le cas où plusieurs réactifs différents sont introduits selon ce procédé sur un même gel il est impératif de ne pas avoir de mélange de réactifs.

Chacune des zones Sm$_1$, Sm$_2$..Sm$_i$ du masque correspondant aux différentes zones d'incubation Si$_1$, Si$_2$.. Si$_i$ du gel se présente alors sous la forme de pyramide à base rectangulaire ou carré ou encore de surface de révolution conique centrée ou excentrée à base circulaire ellipsoïdale ou rectangulaire etc... possédant chacune un orifice (1) à son sommet et séparée les unes des autres par des rigoles et tous les orifices étant situés de préférence à la même distance du gel.

Des pompes indépendantes injectent simultanément (ou successivement) par chacun des orifices les volumes calibrés des différents réactifs de façon à ce que les surfaces de gel $Si_1$, $Si_2$..$Si_i$ soient recouvertes.

Un excès de réactif peut être toléré dans la mesure où les différentes surfaces $Sm_1$, $Sm_2$..$Sm_i$ sont légèrement plus grandes que les surfaces $Si_1$, $Si_2$..$Si_i$ à incuber et que les écartements gel masque au niveau de la périphérie des zones $Si_1$, $Si_2$ et $Si_i$ soient inférieurs à 2mm (cela pour des liquides introduits dont les forces de cohésion sont analogues à celles de l'eau) pour permettre le maintien par capillarité d'un éventuel excès de réactif au delà de cette périphérie.

L'élimination des réactifs après la phase d'incubation se fait de la même manière que précédemment décrit.

L'invention a également pour objet un ensemble comprenant un masque et un gel, permettant de réaliser une incubation sur un gel préalablement soumis à une électrophorèse ou permettant de faire des réactions croisées (cross-dot).

L'invention a également pour objet un ensemble comportant des moyens permettant que les parties Sm du masque soient suffisamment proches du gel pour que le liquide destiné à être étalé sur les surfaces d'incubation Si soit maintenu par capillarité sur les surfaces d'incubation Si du gel en projection des parties Sm du masque et pour que les parties Sm du masque soient parallèles au gel ou soient inclinées par rapport au gel, de préférence selon un angle d'environ 0,5 à environ 3°, avantageusement d'environ 1,5°, la distance minimum entre le masque et le gel étant avantageusement au voisinage de la fente et la distance maximum entre le masque et le gel étant avantageusement au voisinage de l'orifice de dépôt.

L'invention concerne également un procédé de dépôt, d'étalement et d'incubation d'un ou plusieurs liquide(s) sur un gel (de surface Sg) selon une ou plusieurs zone(s) déterminée(s) du gel, ci-après désigné(s) par "surface d'incubation Si", caractérisé en ce que

- on positionne un masque, selon l'invention, par rapport au gel, de façon à ce que la partie Sm du masque soit suffisamment proche de la surface d'incubation Si, pour que le liquide destiné à être étalé sur la surface Si soit maintenu par capillarité sur ladite surface Si, et en ce que :
- on introduit le liquide dans l'orifice de dépôt défini ci-dessus,
- on maintient le masque par rapport au gel dans la position telle qu'indiquée ci-dessus, ou, si le masque et le gel sont parallèles entre eux, on incline le masque par rapport au gel pour que le liquide se répartisse par capillarité sur la surface Si, ou on incline l'ensemble gel et masque par rapport à l'horizontale de façon à ce que le liquide se répartisse sur la surface d'incubation Si par gravité, pendant un temps suffisant pour que la réaction entre le liquide et les composants, notamment protéines, déposés sur le gel, notamment par électrophorèse, puisse avoir lieu,

- à l'issue de l'incubation, on retire l'excès de liquide étalé sur la surface d'incubation déterminée du gel par des moyens disposés à travers la fente définie précédemment, notamment à l'aide de papier filtre,
- on retire le masque du gel.

L'invention a également pour objet un procédé dans lequel le masque est maintenu parallèle par rapport au gel, et l'ensemble est incliné selon un angle suffisant par rapport à l'horizontale, pour que le liquide s'étale par gravité sur la surface d'incubation Si, et avantageusement selon un angle allant d'environ 5° à environ 90°, avantageusement d'environ 30°.

L'invention concerne également un procédé dans lequel le masque est maintenu selon un angle suffisant par rapport au gel pour que le liquide s'étale par capillarité sur la surface d'incubation Si, et notamment selon un angle d'environ 0,5 à environ 3°, avantageusement d'environ 1,5°.

L'invention a pour objet un appareil d'électrophorèse caractérisé en ce qu'il comporte un masque tel que décrit précédemment, destiné à l'étalement et à l'incubation d'un ou de plusieurs réactifs.

L'invention peut être illustrée à la lumière de la description qui suit.

Ce nouveau type de masque de l'invention (masque flottant ou masque suspendu) peut être constitué d'une pièce plastique, plane et rigide, de préférence transparente (Plexiglas par exemple) ayant par exemple une épaisseur d'environ 2 à environ 10 mm et dans laquelle la surface inférieure comporte au moins une partie Sm dont la surface correspond au moins à celle de la surface du gel à recouvrir par le réactif, encore appelée "surface d'incubation Si". Cette pièce plastique est percée de part en part et perpendiculairement à sa surface d'un orifice de dépôt, de préférence de forme allongée situé à l'intérieur ou à l'extérieur de la zone d'incubation. Cet orifice de dépôt permet l'introduction des réactifs au moyen d'une pipette.

La partie Sm de la surface inférieure de la pièce plastique correspondant à la surface d'incubation est caractérisée par le fait qu'elle ne présente pas d'irrégularités de surface (polissage). Elle est disposée par des moyens de maintien appropriés à proximité de la surface du gel, soit parallèlement à celle-ci, soit avec une légère inclinaison, mais sans qu'il y ait contact entre la surface d'incubation Si et la partie Sm du masque.

Etant donné la faible distance entre la surface du gel et la surface plastique (de 0,1 à 2 mm), le liquide introduit au moyen d'une pipette par l'orifice de dépôt se répartit par capillarité entre les deux surfaces planes (partie Sm et surface du gel) et vient recouvrir la zone du gel se trouvant en projection au-dessous de la partie Sm de la pièce plastique.

Le volume introduit doit être au moins égal au volume Vo de l'espace dégagé entre les deux surfaces pour que la surface d'incubation Si soit recouverte.

Un excès de liquide (réactif) par rapport à ce volume Vo pouvant aller jusqu'à 1,2 ou 1,3 fois; le volume Vo étant préféré. En effet, il permet d'assurer le recouvrement du gel selon la surface d'incubation Si, même si une légère évaporation du réactif se produit lors de la phase d'incubation.

En effet, cet excès de réactif va être principalement maintenu par capillarité au niveau de l'orifice de dépôt, dans la mesure où celui-ci se présente sous une forme allongée de faible largeur (1 à 2 mm) (pour que les phénomènes de capillarité s'y développent) et de longueur suffisante (supérieure ou égale à 4 mm) pour assurer un volume suffisant de liquide maintenu par capillarité (voir exemples ci-après).

Si l'on ajoute, par l'orifice de dépôt, une quantité de réactif légèrement supérieure (x 1,1) à la somme du volume Vo et du volume de liquide susceptible d'être maintenue par capillarité au niveau de l'orifice de dépôt, cet excès se répartit de façon homogène à la périphérie de la surface d'incubation de la pièce plastique, entraînant une légère augmentation de la surface du gel soumise à l'incubation, mais cela de façon régulière, cet excès étant toujours maintenu au niveau de la pièce plastique par capillarité.

Dans le cas de l'utilisation d'un seul réactif, le seul inconvénient est une consommation inutile de réactif.

Dans le cas d'incubation de zones adjacentes avec des réactifs différents, il suffira que l'espacement entre les surfaces d'incubation contiguës soit suffisant pour tolérer cette augmentation de surface traitée, sans qu'il y ait risque que les surfaces traitées par deux réactifs différents se rejoignent.

De toute façon, l'écartement entre les zones doit être supérieur ou égal à 2 ou 3 mm, pour que les phénomènes de diffusion des réactifs dans le gel se produisant pendant la phase d'incubation (5' à 30') n'aboutissent pas à des interactions entre les différents réactifs qui ont diffusé dans le gel. Pour des temps d'incubation plus longs, par exemple 1 h, un espacement supérieur ou égal à 4 ou 5 mm sera nécessaire, mais cela est également vrai pour les autres types de procédé précédemment utilisés.

La forme allongée de l'orifice de dépôt, outre le rôle de réserve de réactif mentionnée plus haut, présente l'avantage de permettre une introduction facile du réactif sur le gel, par exemple en faisant couler le liquide sur la paroi verticale de l'orifice, à une extrémité de celui-ci.

Dans le cas d'un orifice circulaire de même diamètre que la largeur de l'orifice précédent, il faut assurer une étanchéité par friction entre l'embout de section circulaire de la pipette et l'orifice, et injecter avec un légère pression le réactif à la surface du gel, cette pression ayant une valeur telle qu'elle soit égale ou supérieure à celle nécessaire à vaincre les forces de capillarité qui se développent au niveau de l'orifice circulaire de faible section. Dans ce cas, il est avantageux que la surface Sm soit supérieure à Si et que le volume de quantité injectée soit inférieur au volume compris entre la surface Sm et le gel.

La largeur de l'orifice de dépôt est telle que l'extrémité de l'embout tronconique d'une pipette puisse y pénétrer sans toutefois lui permettre de descendre au-delà du plan de la surface plastique situé en regard du gel. L'extrémité de la pipette ne peut donc en aucun cas venir endommager la surface du gel lors de l'introduction des réactifs.

Un autre avantage du dispositif du masque suspendu est que les phénomènes d'évaporation pouvant survenir lors de l'incubation sont extrêmement réduits, puisqu'ils ne peuvent se produire qu'à la périphérie de la surface d'incubation et au niveau de l'orifice de dépôt.

Après la phase d'incubation, il convient d'éliminer le réactif en excès.

Dans le cas où plusieurs réactifs sont utilisés sur des zones contiguës, on peut procéder comme suit.

Les différentes surfaces d'incubation sont généralement des rectangles dont les grands côtés sont parallèles et les petits côtés sont colinéaires.

En pratiquant le long de ces petits côtés une fente allant de part et d'autre de la pièce plastique, on peut introduire par celle-ci une feuille de papier filtre venant s'appliquer sur le gel et affleurer le liquide maintenu entre le masque plastique et le gel. Par capillarité, le liquide monte dans le papier filtre et est évacué de la ou des surfaces d'incubation.

Cependant, pour faciliter cette évacuation du liquide par pompage au moyen de papier filtre, on a intérêt à ce que le masque suspendu ne soit pas parfaitement parallèle au gel, mais fasse un dièdre avec un très petit angle 1 à 2°, dièdre dont l'arête est du côté où l'on veut pomper le liquide par le papier filtre. En effet, dans ces conditions, les forces de capillarité sont plus importantes du côté où la distance gel-masque est la plus faible et le liquide interposé entre ces deux surfaces a tendance à s'y rassembler et donc à faciliter son élimination par le papier filtre, lorsque celui-ci est introduit dans la fente destinée à cet effet.

## DESCRIPTION DES FIGURES

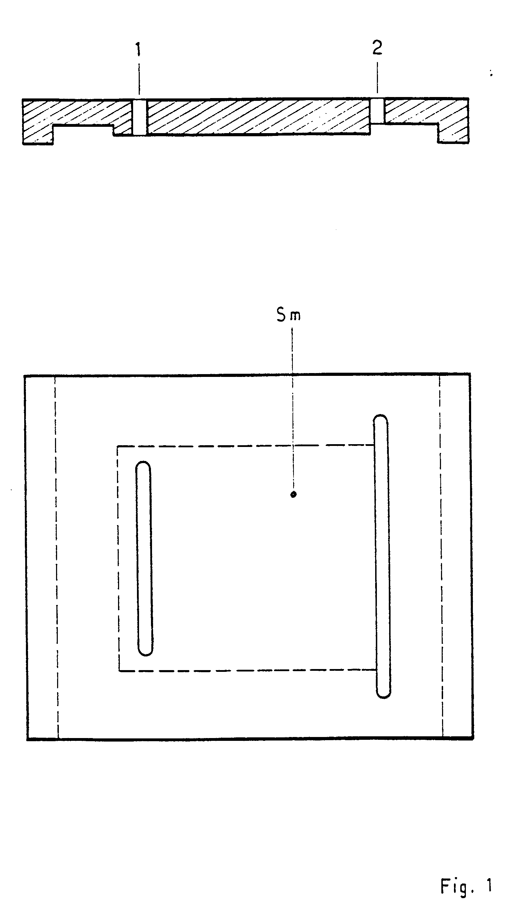

- La Figure 1 représente une vue en coupe et une vue de dessus d'un masque de l'invention destiné au dépôt, à l'étalement et à l'incubation d'un seul liquide sur une surface d'incubation Si.

(1) représente l'orifice de dépôt et (2) représente la fente destinée à pomper l'excès de réactif.

Sm représente la surface utile du masque délimitée, sur un côté par la fente (2), et sur chacun des trois autres côtés par un dénivelé.

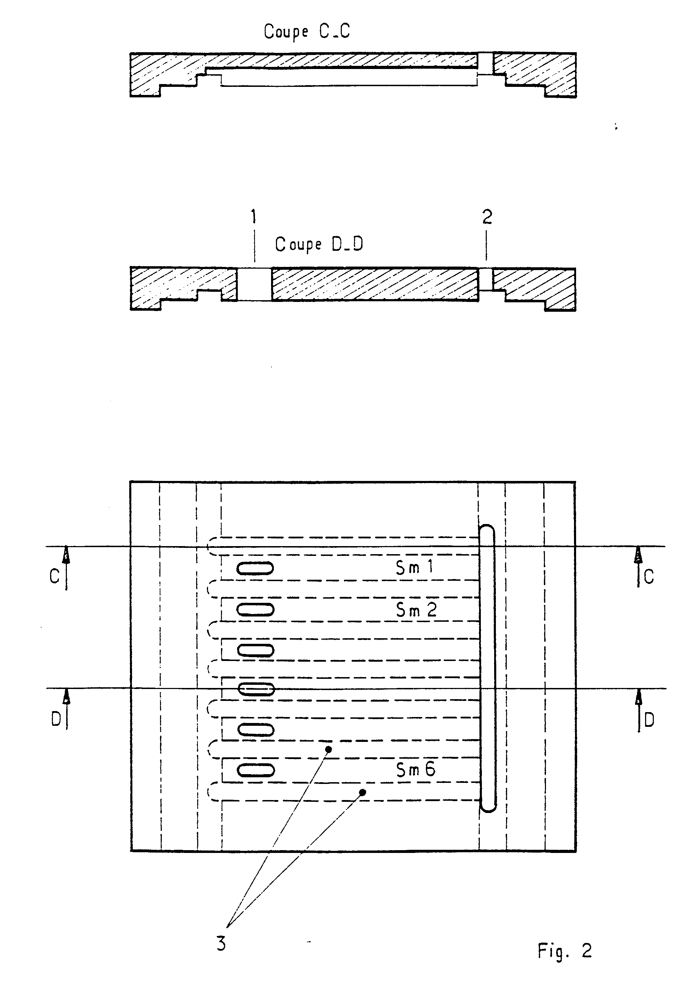

- La Figure 2 représente :

\* une vue en coupe C-C selon la direction d'une rainure,

*    une vue en coupe D-D passant par un orifice de dépôt, et

*    une vue de dessus

d'un masque destiné à recevoir plusieurs liquides devant recouvrir différentes surfaces d'incubation, en l'occurrence six.

(1) correspond aux différents évidements, (2) correspond à la fente et (3) correspond aux rainures destinées à délimiter les différentes surfaces d'incubation $Si_1$ à $Si_6$. Les surfaces utiles $Sm_1$ à $Sm_6$ correspondant aux surfaces d'incubation $Si_1$ à $Si_6$ sont indiquées.

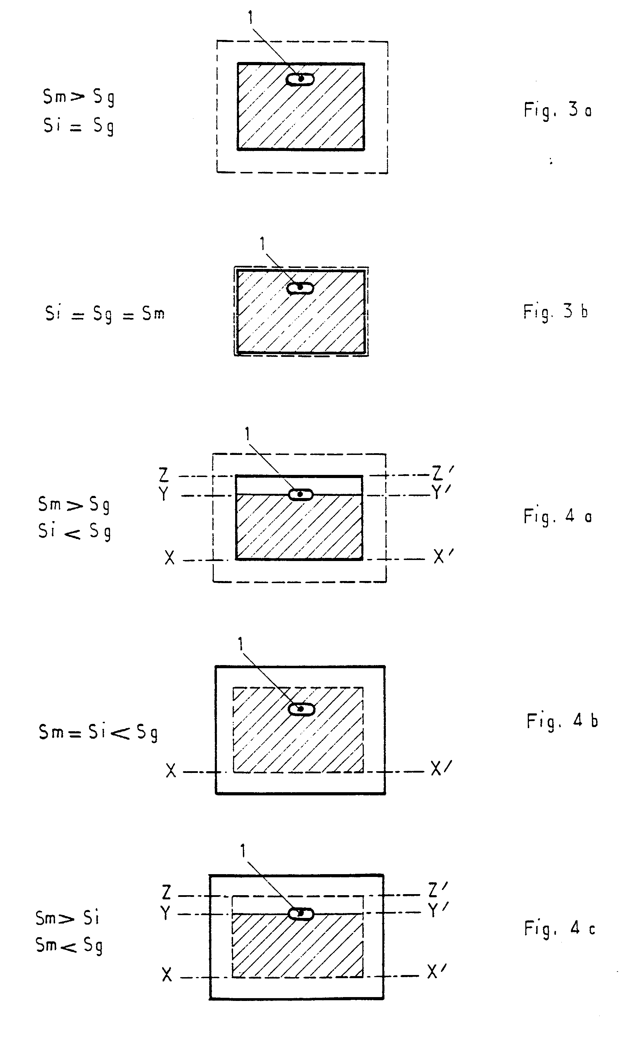

- Les Figures 3a et 3b représentent un ensemble gel-masque destiné au dépôt d'un seul réactif sur la totalité du gel.

Dans ces deux figures, (1) représente l'orifice de dépôt. Le périmètre du masque est en pointillés et le périmètre du gel est en traits pleins.

La fente, non représentée, destinée à pomper le liquide soit est adjacente au bord de Si opposé au voisinage de l'orifice de dépôt (pour Figure 3a), soit est située à l'intérieur de Si (pour Figure 3b).

La partie hachurée correspond à la surface d'incubation Si, qui, dans ces deux cas, est égale à la surface Sg du gel.

.    La Figure 3a représente le cas où la surface utile du masque Sm est supérieure à la surface Sg du gel.

.    La Figure 3b représente le cas où la surface utile Sm du masque est égale à la surface Sg du gel.

- Les Figures 4a, 4b et 4c représentent un ensemble gel-masque pour le dépôt d'un seul réactif sur une partie de la surface Sg du gel. Dans ces cas, la surface d'incubation Si est inférieure à la surface Sg du gel.

Le périmètre du masque est en pointillés et le périmètre du gel est en traits pleins.

La partie hachurée correspond à la surface d'incubation Si.

Dans ces trois Figures, (1) représente l'orifice de dépôt.

Dans ces trois Figures, la fente destinée à pomper l'excès de liquide est située au voisinage de l'axe xx'.

.    Plus précisément, la Figure 4a correspond au cas où la surface utile Sm du masque est supérieure à Si et la surface utile Sm du masque est supérieure à Sg, l'orifice de dépôt (1) étant à l'intérieur ou à l'extérieur de Si.

xx' correspond à la limite inférieure de la surface Si.

yy' correspond à la limite supérieure de Si.

zz' correspond à la limite supérieure du gel.

.    La Figure 4b correspond au cas où la surface utile Sm du masque est égale à la surface d'incubation Si, et la surface utile Sm du masque est inférieure à la surface du gel Sg, l'orifice (1) de dépôt étant à l'intérieur de Si.

xx' correspond à la limité inférieure de Si.

.    La Figure 4c correspond au cas où la surface utile Sm du masque est supérieure à la surface d'incubation Si, et la surface utile Sm du masque est inférieure à la surface Sg du gel. L'orifice de dépôt est à l'intérieur ou à l'extérieur de la surface d'incubation Si.

xx' correspond à la limite inférieure de Si ou de Sm.

yy' correspond à la limite supérieure de Si.

zz' correspond à la limite supérieure de Sm.

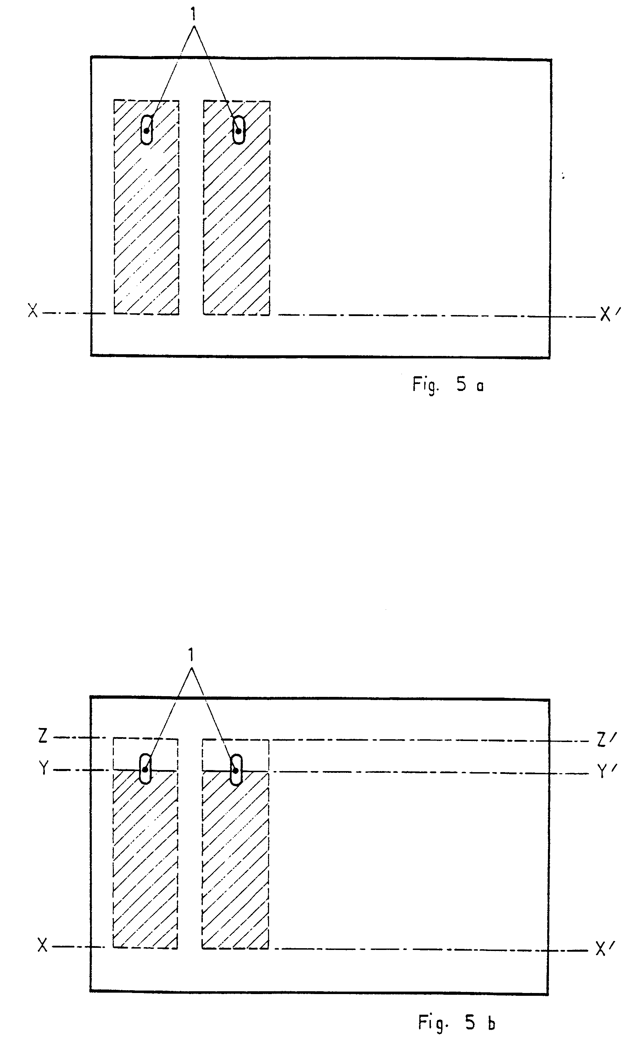

- Les Figures 5a et 5b représentent le cas de plusieurs réactifs ou d'un même réactif sur plusieurs surfaces d'incubation distinctes $Si_1$ à $Si_n$ d'un même gel.

Les orifices de dépôt sont désignés par (1). Les surfaces d'incubation $Si_1$ à $Si_n$ sont hachurées. La surface du gel est délimitée par les traits pleins et les surfaces utiles $Sm_1$ à $Sm_n$ du masque sont délimitées par les traits pointillés.

Dans la Figure 5a,

xx' représente l'alignement des bords inférieurs des surfaces d'incubation $Si_1$ à $Si_n$.

Dans la Figure 5b,

xx' représente l'alignement des bords inférieures des surfaces d'incubation $Si_1$ à $Si_n$;

yy' représente l'alignement des bords supérieurs des surfaces d'incubation $Si_1$ à $Si_n$;

zz' représente l'alignement des bords supérieurs des surfaces $Sm_1$ à $Sm_n$.

Dans les Figures 5a et 5b, la fente, non représentée, est au voisinage de l'axe xx'.

- Les Figures 6a, 6b, 6c, 6d, 6e, 6f, 6g 6h et 6i représentent des schémas en coupe de différentes configurations possibles des masques de l'invention.

La Figure 6a correspond au cas où la surface Sm est plane et parallèle au gel, le gel et la surface Sm étant en position horizontale.

On a représenté par (1) l'orifice d'introduction du réactif, par (e) la distance séparant la surface Sm du gel et par des hachures la surface Si devant être soumise à incubation. Dans ce cas, le volume de réactif à introduire doit être supérieur ou égal à Sm x e.

On note que la surface Sm est limitée, d'une part, par la fente (2) destinée à pomper l'excès de liquide, et, d'autre part, par une partie en dénivelé concave.

La Figure 6b représente le cas où la surface Sm est parallèle au gel, comme indiqué dans la Figure 6a, à la seule différence que l'ensemble gel et masque est incliné du côté de la fente (2) destinée à pomper l'excès de liquide, l'angle formé entre l'ensemble masque et gel par rapport à l'horizontal étant d'environ 15°. Dans ce cas, le volume du réactif introduit doit être supérieur ou égal à Si x e.

La Figure 6c représente le cas où la surface Sm fait un petit angle d'environ 1 à environ 2° avec le gel, qui lui-même est en position horizontale. On a représenté par (e1) la distance minimale entre Sm et la surface Si, et par (e2) la distance maximale entre Sm et Si. Dans ce cas, le volume du réactif introduit est supérieur ou égal à Si x $\frac{(e1 + e2)}{2}$.

La Figure 6d correspond au cas où le masque est constitué par une surface supérieure plane et une surface inférieure plane, qui forment un angle entre elles (dièdre). On a représenté par (e1) la distance minimale entre Sm et Si et par (e2) la distance maximale entre Sm et Si.

Dans ce cas, le volume du réactif introduit est supérieur ou égal à Si x $\frac{(e1 + e2)}{2}$.

La Figure 6e correspond au cas où le masque est constitué par deux surfaces planes formant entre elles un angle (dièdre). Dans ce cas, la surface Sm du masque est égale à (S'm + S"m). La surface S'm est la surface qui est parallèle au gel, qui lui-même est en position horizontale, et la surface S"m fait un angle $\alpha$ avec la surface S'm. La distance minimale entre la surface S"m et la surface Si est e1 et la distance entre la surface S'm et la surface Si est e2. Dans ce cas, le volume du réactif introduit est supérieur ou égal à S'm x e2 avec en plus la condition que :

$$S'm \times e2 \geq (Si - S"m\cos\alpha)e2 + S"m\cos\alpha \frac{(e1 + e2)}{2}$$

Sur la Figure 6e, on a représenté le cas où la surface d'incubation va jusqu'à la fente (2), mais on pourrait également envisager que la surface d'incubation s'arrête à l'intersection (3) des surfaces S'm et S"m. Cette configuration est représentée sur la Figure 6f.

En effet, dans ces conditions, la quantité de réactif par unité de surface étalé sur la zone d'incubation est constante, ce qui n'est pas le cas de l'exemple 6e.

Or, cette constance de la quantité de réactif par unité de surface du gel soumis à l'incubation peut être nécessaire principalement lorsque l'incubation est prolongée (parce que la cinétique de la réaction d'incubation est lente) et que le réactif n'est pas en fort excès par rapport aux besoins de la réaction.

Dans ces conditions, pour obtenir le même résultat quelle que soit la position de la zone d'incubation, on a intérêt à avoir au niveau de la zone d'incubation une équidistance entre le gel et le masque. La zone correspondant au rétrécissement de l'espace gel-masque est soumise à incubation, bien que cela ne soit pas nécessaire, puisqu'elle est, dans ce cas, extérieure à la zone d'incubation et entraîne une légère surconsommation de réactif.

La Figure 6g correspond au cas d'un masque avec une surface plane S'm parallèle au gel en position horizontale prolongée par une surface S"m cylindrique de rayon R, tangente à la surface S'm. Le rayon R est du même ordre de grandeur ou supérieur à la longueur Li de Si. (1) représente l'orifice de dépôt et (2) la fente.

Les Figures 6h et 6i correspondent au cas d'un masque dans lequel la surface supérieure et la surface inférieure comportent toutes les deux une surface cylindrique.

Lorsque la surface supérieure est concave, on se reporte à la Figure 6h et lorsqu'elle est convexe, on se reporte à la Figure 6i.

Dans les deux cas, le diamètre des surfaces cylindriques inférieures est supérieur au carré de la longueur Li de Si.

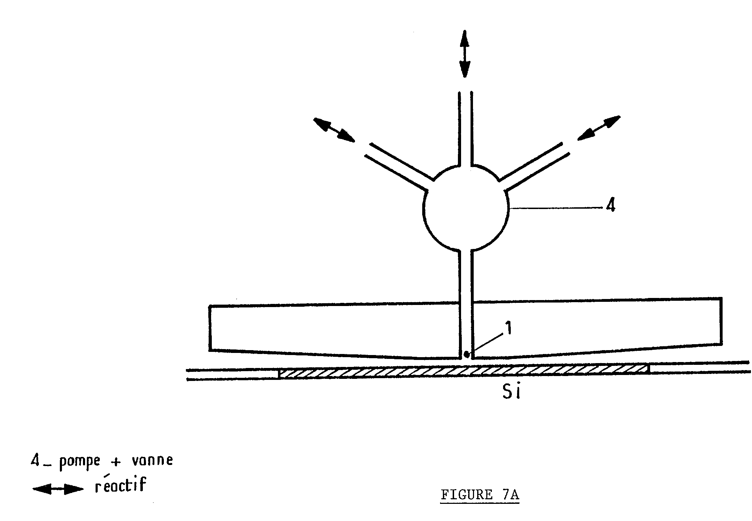

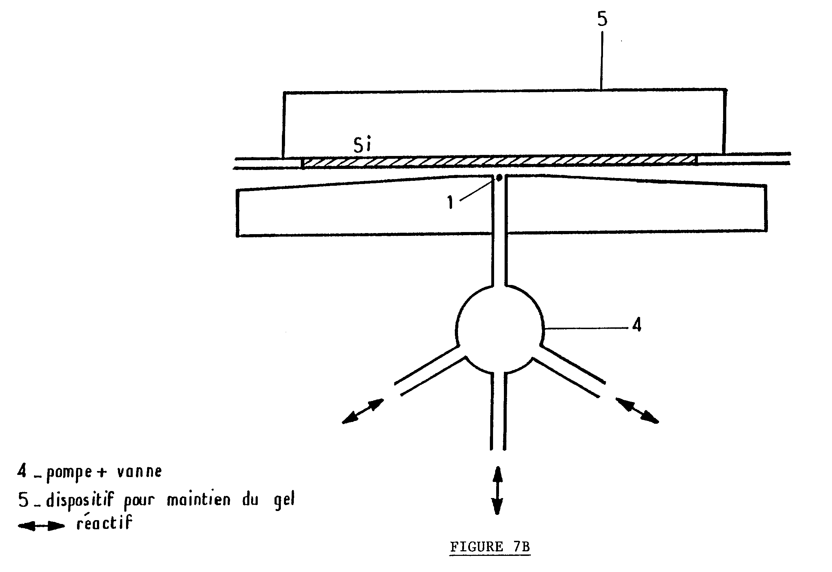

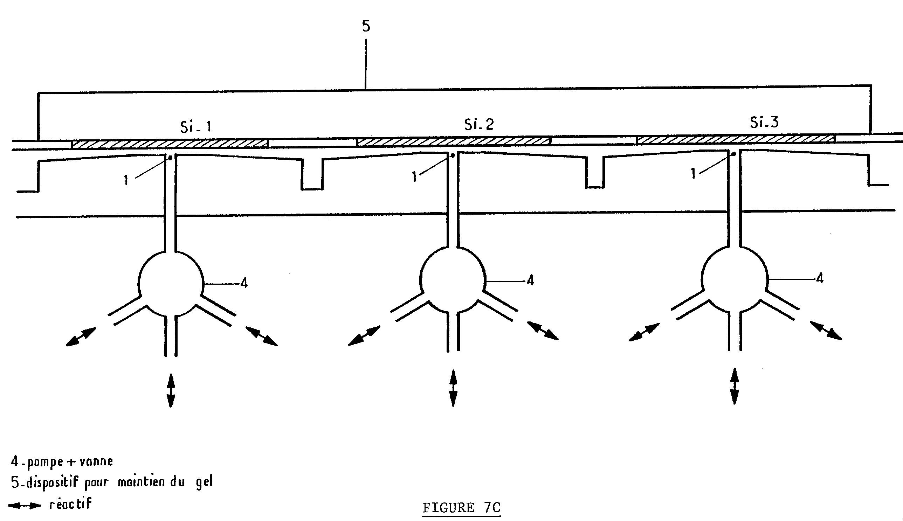

- Les figures 7a, 7b et 7c illustrent un ensemble gel-masque dans lequel le masque est réalisé de telle façon que l'orifice de dépôt du ou des réactifs, constitue également l'orifice (appelé fente lorsqu'il se distingue de l'orifice du dépôt) pour l'élimination des réactifs après l'incubation. Le gel est coulé sur un support plastique.

Dans le cas des figures 7a, 7b et 7c, la face inférieure du masque est inclinée par rapport à la surface du gel, elle-même parallèle à la surface supérieure du masque.

Dans le cas des figures 7b et 7c, le gel est placé au dessus du masque. Dans ce cas, le gel est maintenu à proximité du masque sans être en contact avec ce dernier, par exemple au moyen d'un dispositif par aspiration sous vide (5) par exemple une plaque perforée reliée à une prise de vide. Le gel a donc sa face vers le bas. Notons que quel que soit le mode de réalisation, s'agissant de la position relative du masque par rapport au gel, la face du gel correspond à la surface de ce gel sur laquelle se produit l'incubation et les surfaces dites inférieure et supérieure du masque, correspondent dans tous les cas, à la surface la plus proche du gel (pour la surface inférieure du masque) et à la surface la plus éloignée du gel (pour la surface supérieure du masque).

Dans ce mode de réalisation, les réactifs sont amenés vers la surface de dépôt et d'incubation, au moyen d'une pompe approvisionnée en réactifs par des canaux ou des tuyaux (4) (multicanaux pour différents réactifs).

La figure 7c illustre un dispositif gel-masque permettant le dépôt, l'étalement et l'incubation de réactifs au niveau de plusieurs surfaces séparées du gel.

## EXEMPLES

Exemple I : Masque destiné au dépôt, à l'étalement et à l'incubation d'un seul réactif sur la totalité de la surface du gel :

Dans ces conditions, la surface du gel peut être soit inférieure à la surface Sm du masque (Figure 3a), soit égale à la surface Sm du masque (Figure 3b).

Lorsque le gel est en position horizontale et parallèle à la surface inférieure du masque, la distance entre le gel et le masque est e. Par conséquent le volume de réactif à introduire est au moins égal à Si x e = Sg x e.

Dans le cas d'un excès de réactif qui peut être nécessaire pour compenser les pertes dues à l'évaporation lors de l'incubation, celui-ci se répartit d'une part au niveau de l'orifice de dépôt, dans la mesure où celui-ci a des dimensions telles que peuvent se développer des forces de capillarité, et, d'autre part, régulièrement à la périphérie de Si.

Exemple II : Masque pour le dépôt, l'étalement et l'incubation d'un réactif unique sur une partie du gel:

On peut envisager la configuration suivante.

La surface Sm du masque est supérieure à la surface d'incubation Si et la surface du masque Sm est supérieure ou égale à la surface Sg du gel, l'orifice de dépôt étant à l'intérieur ou à l'extérieur de la surface d'incubation Si (Figure 4a).

Si le gel et le masque sont parallèles entre eux et séparés par une distance e, le volume de réactif introduit est Si x e.

Pour assurer la présence du réactif sur la zone d'incubation Si, l'ensemble gel et masque peut être incliné par rotation autour d'un axe parallèle à xx', de telle sorte que le réactif descende par gravité du côté de la zone du gel à recouvrir, c'est-à-dire entre xx' et yy'.

Afin d'assurer le recouvrement de la surface d'incubation Si par le réactif, une autre possibilité est de maintenir le gel en position horizontale et d'incliner légèrement le masque par rotation autour d'un axe parallèle à xx', de telle sorte que la distance gel-masque $e_1$ au niveau de xx' soit plus faible que la distance gel-masque $e_2$ au niveau de yy'. Les forces de capillarité étant plus importantes au voisinage de xx', le réactif se répartit par capillarité entre xx' et yy'.

Dans ce cas, le masque fait alors avec le plan du gel un angle α. Si Li est la distance en mm entre xx' et yy', tgα est inférieur ou égal à $\frac{2}{Li}$.

Dans ces conditions, le volume de réactif à introduire pour recouvrir Si est :

$$Si \frac{(e_1 + e_2)}{2}$$

$e_1$ étant supérieur ou égal à 0,1 mm car il ne faut pas créer de contact entre le gel et le masque, $e_2$ étant inférieur ou égal à 2 mm pour que les forces de capillarité soient suffisantes.

Un excès de réactif permettant de compenser les effets de l'évaporation pouvant se produire lors de l'incubation, se répartit à partir de yy', entre yy' et zz'.

Exemple III : Masque pour le dépôt, l'étalement et l'incubation d'un réactif unique sur une partie du gel:

La surface Sm du masque est égale à la surface d'incubation Si, et la surface Sm du masque est inférieure à la surface Sg du gel, l'orifice de dépôt étant à l'intérieur de la surface d'incubation (Figure 4b).

Si le gel est en position horizontale et est parallèle au masque, à la distance e, le volume de liquide à introduire est Si x e = Sm x e.

Un léger excès de réactif se répartit d'une part au niveau de l'orifice de dépôt (s'il possède des dimensions appropriées pour que s'y développent des forces de capillarité) et d'autre part régulièrement à la périphérie de Si. Dans ce cas, il n'est pas nécessaire d'avoir à incliner l'ensemble gel et masque, ni de créer un angle entre le plan du gel et celui du masque.

Exemple IV : Masque pour le dépôt, l'étalement et l'incubation d'un réactif unique sur une partie du gel:

La surface Sm du masque est supérieure à la surface d'incubation Si, et la surface Sm du masque est inférieure à la surface Sg du gel, l'orifice de dépôt étant à l'intérieur ou à l'extérieur de la surface d'incubation (Figure 4c).

a) Si le gel et le masque sont parallèles, séparés par une distance e, le volume de réactif introduit est Si x e.

Pour assurer la présence du réactif entre xx' et yy', l'ensemble gel et masque est incliné par rotation autour d'un axe parallèle à xx', de telle sorte que xx' soit en position plus basse que yy' et que le liquide descende par gravité jusqu'à xx' et se rassemble entre xx' et yy'.

L'angle maximum autorisé pour que le liquide reste maintenu par capillarité entre xx' et yy' est d'autant plus important que la distance e est plus faible. Il peut théoriquement être de 90°, pour une distance e de 0,2 mm, dans le cas où la distance Li entre xx' et yy' n'excède pas 7,5 cm et si le réactif est de l'eau (loi de Jurin).

b) Si le gel est en position horizontale, pour assurer la présence du réactif entre xx' et yy', le masque peut être légèrement incliné. Ceci peut être fait de telle sorte que l'écartement gel-masque $e_1$ au niveau de xx' soit plus faible que l'écartement $e_2$ au niveau de yy' (cf. exemple II). Le volume de réactif est alors :

$$\text{Si } \frac{(e_1 + e_2)}{2} .$$

**Exemple V : Cas de la répartition de plusieurs réactifs, ou éventuellement d'un même réactif, mais sur plusieurs surfaces distinctes d'incubation d'un même gel :**

Ce dernier cas (même réactif sur plusieurs surfaces distinctes) peut être envisagé pour limiter la consommation de réactif.

Si le gel et le masque sont horizontaux et parallèles entre eux, séparés d'une distance e, le volume de réactif à introduire sur chaque surface d'incubation ($Si_1$ à $Si_n$) est $Si_1 \times e$, $Si_2 \times e$, etc ... (Figure 5a).

Cet exemple est analogue à l'exemple III.

**Exemple VI : Cas de la répartition de plusieurs réactifs, ou éventuellement d'un même réactif, mais sur plusieurs surfaces distinctes d'incubation d'un même gel :**

a) Si le gel et le masque sont parallèles entre eux, séparés d'une distance e, on se retrouve dans des conditions analogues à celle de l'exemple IVa.

b) Si le gel est en position horizontale et si le masque est légèrement incliné, on se retrouve dans des conditions analogues à celle de l'exemple IVb.

## Revendications

1. Masque rigide destiné au dépôt, à l'étalement et à l'incubation d'un ou plusieurs liquide(s) sur un gel de surface totale Sg selon une ou plusieurs zone(s) déterminée(s) du gel, ci-après désignée(s) par "surface d'incubation Si", ce masque comportant :

   - une surface supérieure et une surface inférieure, la distance séparant la surface inférieure et la surface supérieure constituant l'épaisseur du masque,
   - au moins un orifice (1) destiné à permettre le dépôt et l'étalement du liquide sur la surface d'incubation Si du gel, et constitué par un évidement traversant le masque sur la totalité de son épaisseur, et/ou
   - au moins une fente (2) traversant le masque sur la totalité de son épaisseur et destinée à permettre le retrait de l'excès de liquide présent sur la surface d'incubation Si du gel, cette fente étant située dans la partie du masque dont la projection est appelée à se trouver soit dans la surface d'incubation Si, soit en dehors de la surface d'incubation Si,
   - des moyens de positionnement du masque, destinés à maintenir sa surface inférieure à une distance déterminée de la surface Sg du gel à proximité duquel le masque serait amené, dans des conditions telles qu'ils empêchent le contact entre la surface inférieure du masque et la surface d'incubation Si, lorsque le masque est à proximité du gel et que le liquide est déposé sur le gel, cette surface inférieure étant en outre telle qu'elle ne comporte, sur au moins une partie d'elle-même désignée par Sm, aucune irrégularité à sa surface susceptible d'être un obstacle à l'étalement du liquide sur la surface d'incubation Si, la surface Sm étant délimitée par rapport au reste de la surface inférieure, de telle sorte que le liquide ne puisse s'étaler que sur la surface Si du gel en projection de Sm, cette projection de Sm sur le gel étant supérieure ou égale à la surface d'incubation Si du gel.

2. Masque selon la revendication 1, dans lequel la surface Sm est plane ou incurvée, de diamètre supérieur ou égal au carré de la longueur de la surface d'incubation, ou est composée de facettes élémentaires, planes ou incurvées, raccordées entre elles, ces différentes facettes, ainsi que leurs raccords, étant tels qu'il n'y a pas obstacle à l'étalement du liquide sur la surface d'incubation Si.

3. Masque selon la revendication 2, dans lequel la surface Sm est cylindrique ou est composée de facettes élémentaires cylindriques.

4. Masque selon la revendication 1, destiné au dépôt, à l'étalement et à l'incubation d'un ou plusieurs liquides, dans lequel la surface inférieure du masque comporte au moins deux dénivelés ou deux rainures (3), les dénivelés ou rainures étant espacés les uns des autres pour délimiter au moins une partie du masque Sm, laquelle ne comporte aucune irrégularité à sa surface, susceptible d'être un obstacle à l'étalement du liquide sur la surface d'incubation Si, et dont la projection sur un gel est égale ou supérieure à une surface d'incubation Si du gel sur laquelle le liquide peut être étalé, les dénivelés et les rainures ayant une hauteur suffisante pour que le liquide puisse être maintenu par capillarité sur la susdite surface d'incubation Si du gel.

5. Masque selon la revendication 1, destiné au dépôt, à l'étalement et à l'incubation d'un seul liquide comportant un seul orifice (1) traversant le masque, destiné à permettre le dépôt, l'étalement et l'incubation d'un seul liquide sur un gel selon une surface d'incubation Si du gel.

6. Masque selon la revendication 1, destiné au dépôt, à l'étalement et à l'incubation

   - de plusieurs liquides sur un gel selon des surfaces d'incubation respectives $Si_1$ à $Si_n$ ou
   - d'un liquide sur un gel selon plusieurs surfaces

d'incubation $Si_1$ à $Si_n$, n variant de 2 à 50,

ce masque étant tel que sa surface inférieure comporte des dénivelés ou des rainures (3), les dénivelés ou rainures étant espacés les uns des autres pour délimiter plusieurs parties du masque $Sm_1$ à $Sm_n$, n variant de 1 à 50, ne comportant aucune irrégularité à leur surface, susceptible d'être un obstacle à l'étalement du liquide sur les surfaces $Si_1$ à $Si_n$, et dont la projection sur le gel est supérieure ou égale aux surfaces d'incubation $Si_1$ à $Si_n$ du gel, sur lesquelles le liquide doit être étalé, les dénivelés et les rainures ayant une hauteur suffisante pour que le liquide puisse être maintenu par capillarité dans les susdites surfaces d'incubation $Si_1$ à $Si_n$ du gel.

7. Masque selon l'une quelconque des revendications 1 à 6, dans lequel l'orifice de dépôt (1) a un volume tel qu'il est susceptible de constituer un réservoir présentant une capacité de rétention du liquide en excès pour assurer l'étalement du liquide sur la surface d'incubation Si.

8. Masque selon l'une quelconque des revendications 1 à 6, dans lequel l'orifice de dépôt (1) a une forme allongée ou une forme circulaire.

9. Masque selon l'une quelconque des revendications 1 à 8, dans lequel l'orifice de dépôt (1) est situé au voisinage du milieu de la partie Sm du masque et a la forme d'une fente allongée, dont les dimensions sont telles qu'elle ne peut pas empêcher le liquide de se déposer sur la surface d'incubation Si, cet orifice de dépôt étant également susceptible d'assurer la fonction de la fente destinée à permettre le retrait de l'excès de liquide qui est étalé sur la surface Si.

10. Masque selon la revendication 9, dans lequel la longueur de l'orifice de dépôt est la longueur de la surface d'incubation Si, et sa largeur est d'environ 1 mm à environ 2 mm.

11. Masque selon l'une quelconque des revendications 1 à 8, dans lequel la fente (2) destinée à permettre le retrait du liquide en excès est sensiblement parallèle à la largeur de la surface d'incubation et est positionnée de façon adjacente au bord de la surface d'incubation qui est opposé au voisinage de l'orifice de dépôt (1) et la surface périphérique interne de la fente est perpendiculaire à la surface du masque.

12. Masque selon la revendication 11, caractérisé en ce que la largeur de la fente est d'environ 1 mm à environ 4 mm, notamment 2 mm, et sa longueur est supérieure ou égale à la largeur de la surface Si.

13. Masque selon la revendication 12, caractérisé en ce que la surface périphérique interne de la fente est inclinée par rapport à la direction perpendiculaire de la surface du masque pour permettre la mise en contact directe des moyens permettant le retrait du liquide en excès avec ledit liquide en excès.

14. Masque selon l'une quelconque des revendications 1 à 13, dans lequel l'épaisseur du masque est d'environ 1 mm à environ 20 mm, et les dénivelés (3) ont une hauteur au moins égale à 0,2 mm, ou les rainures (3) ont une largeur suffisante pour que, pendant l'incubation, chaque liquide maintenu par capillarité entre le masque et une surface d'incubation Si ne se mélange pas avec les liquides maintenus dans les surfaces d'incubation qui sont directement adjacentes à Si.

15. Masque selon la revendication 14 dans lequel l'épaisseur du masque est de 2 mm à 10 mm et les dénivelés (3) ont une hauteur de 0,5 mm à 20 mm et la largeur des rainures est d'environ 1 mm à environ 10 mm.

16. Masque selon l'une quelconque des revendications 1 à 15, comportant plusieurs parties Sm de masque, chacune des parties Sm comportant un orifice de dépôt (1), ce masque comportant une fente (2) unique destinée à permettre le retrait de l'excès de liquide qui est étalé sur les surfaces Si du gel.

17. Masque selon la revendication 16, caractérisé en ce qu'il comporte entre 6 et 50 parties Sm et en ce que l'orifice de dépôt est situé dans la partie de Sm dont la projection sur le gel correspond à la partie anodique du gel, et en ce que la fente (2) s'étend perpendiculairement par rapport à la plus grande des dimensions des parties Sm du masque, et est située dans le masque à une position telle que sa projection soit dans la région cathodique du gel.

18. Masque selon l'une quelconque des revendications 1 à 17, comportant une seule partie Sm, dont les dimensions sont supérieures ou égales à celles de Si, et comportant au voisinage de l'une de ses extrémités un orifice (1) ayant une forme allongée, et comportant également au voisinage de l'autre extrémité, une fente (2) destinée au retrait de l'excès de liquide.

19. Masque selon la revendication 18, caractérisé en ce que l'orifice (1) a une longueur correspondant à la largeur de la surface d'incubation Si et la fente (2) a comme longueur, au moins la largeur de Si.

20. Masque selon l'une quelconque des revendications 1 à 19, comportant des moyens de positionnement du masque par rapport au gel tels que la distance minimum entre le gel et la partie Sm du masque soit supérieure ou égale à 0,1 mm, et la valeur de la distance maximum soit d'environ 0,5 mm à environ 2 mm.

21. Masque selon l'une quelconque des revendications 1 à 9, 14, 18 ou 19, caractérisé en ce que l'orifice de dépôt (1) est également destiné à permettre le retrait du liquide en excès présent sur la surface d'incubation Si du gel.

22. Ensemble comprenant un masque selon l'une quelconque des revendications 1 à 21, et un gel permettant de réaliser une incubation sur un gel préalablement soumis à une électrophorèse ou permettant de faire des réactions croisées (cross-dot).

23. Ensemble selon la revendication 22, comportant des moyens de positionnement du masque, permettant que les parties Sm du masque soient suffisamment proches du gel pour que le liquide destiné à être étalé sur les surfaces d'incubation Si soit maintenu par capillarité sur les surfaces d'incubation Si du gel en projection des parties Sm du masque et pour que les parties Sm du masque soient parallèles au gel ou soient inclinées par rapport au gel.

24. Ensemble selon la revendication 22, caractérisé en ce que les parties Sm du masque sont inclinées par rapport au gel, selon un angle d'environ 0,5 à environ 3°, par exemple 1,5°.

25. Ensemble selon la revendication 23 ou 24, caractérisé en ce que la distance minimum entre le masque et le gel est au voisinage de la fente et la distance maximum entre le masque et le gel est au voisinage de l'orifice de dépôt.

26. Ensemble comportant un gel et un masque selon l'une quelconque des revendications 1 à 21, caractérisé en ce que le masque est placé au dessus du gel, la surface de dépôt, d'étalement et d'incubation du gel étant à proximité de la face inférieure du masque.

27. Ensemble comportant un gel et un masque selon l'une quelconque des revendications 1 à 21, caractérisé en ce que le masque est placé au-dessous du gel, la surface de dépôt, d'étalement et d'incubation du gel étant à proximité de la face inférieure du masque.

28. Procédé de dépôt, d'étalement et d'incubation d'un ou plusieurs liquide(s) sur un gel de surface Sg selon une ou plusieurs zone(s) déterminée(s) du gel, ci-après désigné(s) par "surface d'incubation Si", caractérisé en ce que

- on positionne un masque, selon l'une quelconque des revendications 1 à 21, par rapport au gel, de façon à ce que la partie Sm du masque soit suffisamment proche de la surface d'incubation Si, pour que le liquide destiné à être étalé sur la surface Si soit maintenu par capillarité sur ladite surface Si, et en ce que :
- on introduit le liquide dans l'orifice de dépôt (1) défini ci-dessus,
- on maintient le masque par rapport au gel dans la position telle qu'indiquée ci-dessus, ou, si le masque et le gel sont parallèles entre eux, on incline le masque par rapport au gel pour que le liquide se répartisse par capillarité sur la surface Si, ou on incline l'ensemble gel et masque par rapport à l'horizontale de façon à ce que le liquide se répartisse sur la surface d'incubation Si par gravité, pendant un temps suffisant pour que la réaction entre le liquide et les composants, notamment protéines, déposés sur le gel, notamment par électrophorèse, puisse avoir lieu,
- à l'issue de l'incubation, on retire l'excès de liquide étalé sur la surface d'incubation déterminée du gel par des moyens disposés à travers la fente (2) définie précédemment, notamment à l'aide de papier filtre,
- on retire le masque du gel.

29. Procédé selon la revendication 28, dans lequel le masque est maintenu parallèle par rapport au gel, et l'ensemble est incliné selon un angle suffisant par rapport à l'horizontale, pour que le liquide s'étale par gravité sur la surface d'incubation Si.

30. Procédé selon la revendication 30, dans lequel le masque est maintenu selon un angle suffisant par rapport au gel pour que le liquide s'étale par capillarité sur la surface d'incubation Si.

31. Procédé selon la revendication 30, dans lequel le masque est maintenu selon un angle de 0,5 à 3°, par exemple 1,5°, par rapport au gel, ce dernier étant en position horizontale.

32. Appareil d'électrophorèse caractérisé en ce qu'il comporte un masque selon l'une quelconque des revendications 1 à 21, ou un ensemble selon l'une des revendications 22 à 27, destiné à l'étalement et à l'incubation d'un ou de plusieurs réactifs.

**Patentansprüche**

1. Starre Maske, die bestimmt ist zum Aufbringen, zum Verteilen und zum Inkubieren einer oder mehrerer Flüssigkeit(en) auf ein Gel mit Gesamtoberfläche Sg in eine oder mehrere bestimmte Zone(n) des Gels, nachfolgend als "Inkubationsoberfläche Si" bezeichnet, wobei die Maske umfaßt:

- eine obere Fläche und eine untere Fläche, wobei der Abstand, der die untere Fläche von der oberen Fläche trennt, die Dicke der Maske bildet,
- mindestens eine Öffnung (1), die bestimmt ist, das Aufbringen und die Verteilung von Flüssigkeit auf der Inkubationsoberfläche Si des Gels zu ermöglichen, und durch eine Ausnehmung gebildet ist, die die Maske über ihre gesamte Dicke durchquert, und/oder
- mindestens eine Spalte (2), die die Maske über ihre gesamte Dicke durchquert und dazu bestimmt ist, den Rückzug der überschüssigen Flüssigkeit zu ermöglichen, die auf der Inkubationsoberfläche Si des Gels vorhanden ist, wobei diese Spalte in dem Teil der Maske angeordnet ist, deren Projektion sich entweder in der Inkubationsoberfläche Si oder außerhalb der Inkubationsoberfläche Si befindet,
- Mittel zum Anordnen der Maske, die bestimmt sind, die untere Fläche in einem bestimmten Abstand von der Oberfläche Sg des Gels zu halten, in deren Nähe die Maske geführt wird, unter Bedingungen, daß sie den Kontakt zwischen der unteren Fläche der Maske und der Inkubationsoberfläche Si verhindern, wenn die Maske in der Nähe des Gels ist, und daß die Flüssigkeit auf das Gel aufgebracht wird, wobei die untere Fläche außerdem so ausgebildet ist, daß sie auf mindestens einem mit Sm bezeichneten Teil keine Unregelmäßigkeit auf ihrer Oberfläche aufweist, die ein Hindernis für die Verteilung von Flüssigkeit auf der Inkubationsoberfläche Si sein könnte, wobei die Oberfläche Sm in Bezug auf die übrige untere Fläche abgegrenzt ist, in der Weise, daß die Flüssigkeit sich nur auf der Oberfläche Si des Gels in Projektion von Sm verteilen kann, wobei diese Projektion von Sm auf dem Gel größer oder gleich der Inkubationsoberfläche Si des Gels ist.

2. Maske nach Anspruch 1, in der die Oberfläche Sm eben oder gewölbt ist, einen Durchmesser aufweist, der größer oder gleich dem Quadrat der Länge der Inkubationsoberfläche ist, oder aus ebenen oder gewölbten Facettenelementen zusammengesetzt ist, die untereinander verbunden sind, wobei diese verschiedenen Facetten sowie ihre Verbindungen so ausgebildet sind, daß sie kein Hindernis für die Verteilung von Flüssigkeit auf der Inkubationsoberfläche Si sind.

3. Maske nach Anspruch 2, in der die Oberfläche Sm zylindrisch ist oder aus zylindrischen Facettenelementen zusammengesetzt ist.

4. Maske nach Anspruch 1, die bestimmt ist zum Aufbringen, zum Verteilen und zum Inkubieren einer oder mehrerer Flüssigkeiten, in der die untere Fläche der Maske mindestens zwei Abstufungen oder zwei Nuten (3) aufweist, wobei die Abstufungen oder Nuten in einem Abstand zueinander angeordnet sind, um mindestens einen Teil der Maske Sm abzugrenzen, der keine Unregelmäßigkeiten auf seiner Oberfläche aufweist, die ein Hindernis für die Verteilung von Flüssigkeit auf der Inkubationsoberfläche Si sein können, und dessen Projektion auf ein Gel gleich oder größer ist als eine Inkubationsoberfläche Si des Gels, auf der die Flüssigkeit verteilt werden kann, wobei die Abstufungen und Nuten eine ausreichende Höhe aufweisen, daß die Flüssigkeit durch Kapillarkraft auf der Inkubationsoberfläche Si des Gels gehalten werden kann.

5. Maske nach Anspruch 1, die bestimmt ist zum Aufbringen, zum Verteilen und zum Inkubieren einer einzigen Flüssigkeit, umfassend eine einzige Öffnung (1), die die Maske durchquert, die bestimmt ist zum Aufbringen, Verteilen und Inkubieren einer einzigen Flüssigkeit auf ein Gel in eine Inkubationsoberfläche Si des Gels.

6. Maske nach Anspruch 1, die bestimmt ist zum Aufbringen, zum Verteilen und zum Inkubieren

- mehrerer Flüssigkeiten auf ein Gel in zugehörige Inkubationsoberflächen $Si_1$ bis $Si_n$ oder
- einer Flüssigkeit auf ein Gel in mehrere Inkubationsoberflächen $Si_1$ bis $Si_n$, wobei n zwischen 2 und 50 liegt,

wobei die Maske so ausgebildet ist, daß ihre untere Fläche Abstufungen oder Nuten (3) aufweist, wobei die Abstufungen oder Nuten zueinander in einem Abstand angeordnet sind, um mehrere Teile der Maske $Sm_1$ bis $Sm_n$ abzugrenzen, wobei n zwischen 1 und 50 liegt, die keine Unregelmäßigkeit auf ihrer Oberfläche aufweisen, die ein Hindernis für die Verteilung von Flüssigkeit auf den Oberflächen $Si_1$ bis $Si_n$ sein können, und deren Projektion auf das Gel größer oder gleich den Inkubationsoberflächen $Si_1$ bis $Si_n$ des Gels ist, auf die die Flüssigkeit verteilt werden soll, wobei die Abstufungen und Nuten eine ausreichende Höhe aufweisen, damit die Flüssigkeit durch Kapillarkraft in den Inkubationsoberflächen $Si_1$ bis $Si_n$ des Gels gehalten werden kann.

7. Maske nach einem der Ansprüche 1 bis 6, in der die Einführöffnung (1) ein Volumen aufweist, so daß sie in der Lage ist, ein Reservoir auszubilden, das eine Speicherkapazität für einen Überschuß an Flüssigkeit aufweist, um die Verteilung von Flüssigkeit auf der Inkubationsoberfläche Si sicherzustellen.

8. Maske nach einem der Ansprüche 1 bis 6, in der die Einführöffnung (1) eine längliche Form oder eine Kreisform aufweist.

9. Maske nach einem der Ansprüche 1 bis 8, in der die Einführöffnung (1) im Bereich der Mitte des Teils Sm der Maske angeordnet ist und die Form einer länglichen Spalte aufweist, deren Dimensionen so gewählt sind, daß sie ein Aufbringen der Flüssigkeit auf die Inkubationsoberfläche Si nicht behindern kann, wobei die Einführöffnung gleichermaßen in der Lage ist, die Funktion der Spalte sicherzustellen, die bestimmt ist, den Rückzug überschüssiger Flüssigkeit, die auf der Oberfläche Si verteilt ist, zu ermöglichen.

10. Maske nach Anspruch 9, in der die Länge der Einführöffnung die Länge der Inkubationsoberfläche Si ist und ihre Breite ungefähr 1 mm bis ungefähr 2 mm beträgt.

11. Maske nach einem der Ansprüche 1 bis 8, in der die Spalte (2), die bestimmt ist, den Rückzug der überschüssigen Flüssigkeit zu ermöglichen, im wesentlichen parallel ist zur Breite der Inkubationsoberfläche und angrenzend an den Rand der Inkubationsfläche angeordnet ist, der dem Bereich der Einführöffnung (1) gegenüber steht, und die Innenoberfläche der Spalte ist senkrecht zur Oberfläche der Maske.

12. Maske nach Anspruch 11, dadurch gekennzeichnet, daß die Breite der Spalte ungefähr 1 mm bis ungefähr 4 mm, insbesondere 2 mm beträgt, und ihre Länge größer oder gleich der Breite der Oberfläche Si ist.

13. Maske nach Anspruch 12, dadurch gekennzeichnet, daß die Innenoberfläche der Spalte in Bezug auf die senkrechte Richtung der Oberfläche der Maske geneigt ist, um zu er. möglichen, daß Mittel, die den Rückzug von überschüssiger Flüssigkeit ermöglichen, mit der überschüssigen Flüssigkeit in direkten Kontakt gebracht werden.

14. Maske nach einem der Ansprüche 1 bis 13, in der die Dicke der Maske ungefähr 1 mm bis ungefähr 20 mm beträgt und die Abstufungen (3) eine Höhe von mindestens gleich 0,2 mm aufweisen oder die Nuten (3) eine ausreichende Breite aufweisen, damit während der Inkubation jede Flüssigkeit, die durch Kapillarkraft zwischen der Maske und der Inkubationsoberfläche Si gehalten ist, sich nicht mit den Flüssigkeiten vermischt, die in den Inkubationsoberflächen gehalten sind, die direkt an Si angrenzen.

15. Maske nach Anspruch 14, in der die Dicke der Maske von 2 mm bis 10 mm beträgt und die Abstufungen (3) eine Höhe von 0,5 mm bis 20 mm aufweisen und die Breite der Nuten ungefähr 1 mm bis ungefähr 10 mm beträgt.

16. Maske nach einem der Ansprüche 1 bis 15, umfassend mehrere Teile Sm der Maske, wobei jeder der Teile Sm eine Einführöffnung (1) umfaßt, wobei die Maske eine einzige Spalte (2) umfaßt, die dazu bestimmt ist, den Rückzug überschüssiger Flüssigkeit zu ermöglichen, die auf den Oberflächen Si des Gels verteilt ist.

17. Maske nach Anspruch 16, dadurch gekennzeichnet, daß sie zwischen 6 und 50 Teilen Sm umfaßt und dadurch, daß die Einführöffnung in dem Teil von Sm angeordnet ist, dessen Projektion auf dem Gel dem anodischen Teil des Gels entspricht, und dadurch, daß die Spalte (2) sich in Bezug auf die größte der Abmessungen der Teile Sm der Maske senkrecht erstreckt und in der Maske an einer Position angeordnet ist, so daß ihre Projektion im kathodischen Bereich des Gels liegt.

18. Maske nach einem der Ansprüche 1 bis 17, umfassend einen einzigen Teil Sm, dessen Abmessungen größer oder gleich derer von Si sind, und umfassend im Bereich des einen der Enden eine Öffnung (1) von länglicher Form und im Bereich des anderen Endes gleichermaßen umfassend eine Spalte (2), die zum Rückzug überschüssiger Flüssigkeit bestimmt ist.

19. Maske nach Anspruch 18, dadurch gekennzeichnet, daß die Öffnung (1) eine Länge entsprechend der Breite der Inkubationsoberfläche Si aufweist und die Spalte (2) in der Länge mindestens die Breite von Si aufweist.

20. Maske nach einem der Ansprüche 1 bis 19, umfassend Mittel zum Anordnen der Maske in Bezug auf das Gel, so daß der Minimalabstand zwischen dem Gel und dem Teil Sm der Maske größer oder gleich 0,1 mm ist und der Wert des Maximalabstandes ungefähr 0,5 mm bis ungefähr 2 mm beträgt.

21. Maske nach einem der Ansprüche 1 bis 9, 14, 18 oder 19, dadurch gekennzeichnet, daß die Einführöffnung (1) gleichermaßen dazu bestimmt ist, den Rückzug von überschüssiger Flüssigkeit zu ermöglichen, die auf der Inkubationsoberfläche Si des Gels vorhanden ist.

22. Anordnung umfassend eine Maske nach einem der Ansprüche 1 bis 21 und ein Gel, die ermöglichen, eine Inkubation auf einem Gel auszuführen, das zuvor einer Elektrophorese unterzogen wurde, oder die ermöglichen, Kreuzreaktionen (cross-dot) durchzuführen.

23. Anordnung nach Anspruch 22 umfassend Mittel zum Anordnen der Maske, die ermöglichen, daß die Teile Sm der Maske ausreichend nahe zum Gel sind, damit die Flüssigkeit, die auf den Inkubationsoberflächen Si verteilt werden soll, durch Kapillarkraft auf den Inkubationsoberflächen Si des Gels in Projektion auf die Teile Sm der Maske gehalten ist und damit die Teile Sm der Maske parallel zum Gel sind oder in Bezug auf das Gel geneigt sind.

24. Anordnung nach Anspruch 22, dadurch gekennzeichnet, daß die Teile Sm der Maske in Bezug auf das Gel in einem Winkel von ungefähr 0,5 bis ungefähr 3°, beispielsweise 1,5° geneigt sind.

25. Anordnung nach Anspruch 23 oder 24, dadurch gekennzeichnet, daß der Minimalabstand zwischen der Maske und dem Gel im Bereich der Spalte und der Maximalabstand zwischen der Maske und dem Gel im Bereich der Einführöffnung liegt.

26. Anordnung umfassend ein Gel und eine Maske nach einem der Ansprüche 1 bis 21, dadurch gekennzeichnet, daß die Maske auf das Gel angeordnet ist, wobei die Oberfläche zum Aufbringen, Verteilen und Inkubieren des Gels in der Nähe der unteren Seite der Maske ist.

27. Anordnung umfassend ein Gel und eine Maske nach einem der Ansprüche 1 bis 21, dadurch gekennzeichnet, daß die Maske unter das Gel angeordnet ist, wobei die Oberfläche zum Aufbringen, Verteilen und Inkubieren des Gels in der Nähe der unteren Seite der Maske ist.

28. Verfahren zum Aufbringen, Verteilen und Inkubieren einer oder mehrerer Flüssigkeit(en) auf ein Gel mit Gesamtoberfläche Sg in eine oder mehrere bestimmte Zone(n) des Gels, nachfolgend als "Inkubationsoberfläche Si" bezeichnet, dadurch gekennzeichnet, daß

- eine Maske nach einem der Ansprüche 1 bis 21 in Bezug auf das Gel angeordnet wird, in der Weise, daß der Teil Sm der Maske ausreichend nahe an der Inkubationsoberfläche Si ist, damit die Flüssigkeit, die auf der Oberfläche Si verteilt werden soll, durch Kapillarkraft auf der Oberfläche Si gehalten wird, und dadurch, daß
- die Flüssigkeit in die oben definierte Einführöffnung (1) eingeführt wird,

- die Maske in Bezug auf das Gel in einer Position gehalten wird wie es oben angegeben ist, oder, wenn die Maske und das Gel zueinander parallel sind, wird die Maske in Bezug auf das Gel geneigt, damit sich die Flüssigkeit durch Kapillarkraft auf der Oberfläche Si verteilt, oder die Anordnung aus Gel und Maske wird in Bezug auf die Horizontale geneigt, in der Weise, daß die Flüssigkeit sich auf der Inkubationsoberfläche Si durch die Schwerkraft verteilt, während einer Zeit, die ausreicht, daß die Reaktion zwischen der Flüssigkeit und den Verbindungen, insbesondere Proteinen, die auf dem Gel vorhanden sind, insbesondere durch Elektrophorese, stattfinden kann,
- nach Ende der Inkubation die überschüssige Flüssigkeit, die auf der bestimmten Inkubationsoberfläche des Gels verteilt ist, durch angeordnete Mittel durch die Spalte (2) wie zuvor definiert abgezogen wird, insbesondere mit Hilfe von Filterpapier,
- die Maske vom Gel entfernt wird.

29. Verfahren nach Anspruch 28, in dem die Maske in Bezug auf das Gel parallel gehalten wird und die Anordnung in einem ausreichenden Winkel zur Horizontale geneigt wird, damit die Flüssigkeit sich durch Schwerkraft über die Inkubationsoberfläche Si verteilt.

30. Verfahren nach Anspruch 28, in dem die Maske in einem ausreichenden Winkel in Bezug auf das Gel gehalten wird, damit die Flüssigkeit sich durch Kapillarkraft über die Inkubationsoberfläche Si verteilt.

31. Verfahren nach Anspruch 30, in dem die Maske in einem Winkel von 0,5 bis 3°, zum Beispiel 1,5°, in Bezug auf das Gel gehalten wird, wobei das letztere in horizontaler Position ist.

32. Elektrophoresegerät, dadurch gekennzeichnet, daß es eine Maske nach einem der Ansprüche 1 bis 21 umfaßt oder eine Anordnung nach einem der Ansprüche 22 bis 27, das bestimmt ist zur Verteilung und zur Inkubation eines oder mehrerer Reagenzien.

**Claims**

1. Rigid mask intended for deposition, spreading and incubation of one or several liquids on a gel of total surface area Sg according to one or several well-defined zones of the gel, hereafter designated by "incubation surface Si", this mask comprising:

- an upper surface -and a lower surface, the distance separating the lower surface and the upper surface constituting the thickness of the mask,

- at least one orifice (1) intended to permit deposition and spreading of the liquid on the incubation surface Si of the gel, and constituted by a recess crossing the mask over the whole of its thickness, and/or
- at least one slit (2) crossing the mask over the whole of its thickness and intended to permit withdrawal of the extra liquid present on the incubation surface Si of the gel, this slit being situated in the part of the mask whose projection needs to be either in the incubation surface Si, or outside the incubation surface Si,
- mask positioning means, intended to keep its lower surface at a determined distance from the surface Sg of the gel in proximity to which the mask would be brought, under conditions such that they prevent contact between the lower surface of the mask and the incubation surface Si, when the mask is in proximity to the gel and the liquid is deposited on the gel, this lower surface being furthermore such that it does not include, over at least a part of itself designated by Sm, any irregularity on its surface capable of being an obstacle to spreading of the liquid on the incubation surface Si, the surface Sm being delimited with respect to the rest of the lower surface, so that the liquid can only spread on the surface Si of the gel which is a projection of Sm, this projection of Sm on the gel being greater than or equal to the area of the incubation surface Si of the gel.

2. Mask according to Claim 1, in which the surface Sm is flat or curved, of diameter greater than or equal to the square of the length of the incubation surface, or is composed of flat or curved, elementary facets which are connected together, these various facets, as well as their connections, being such that there is no obstacle to the spreading of the liquid on the incubation surface Si.

3. Mask according to Claim 2, in which the surface Sm is cylindrical or is composed of cylindrical elementary facets.

4. Mask according to Claim 1, intended for the deposition, spreading and incubation of one or several liquids, in which the lower surface of the mask comprises at least two differences in height or two grooves (3), the differences in height or grooves being spaced apart from each other in order to delimit at least a part of the mask Sm, which part does not include any irregularity on its surface capable of being an obstacle to the spreading of the liquid on the incubation surface Si, and whose projection on a gel is equal to or greater than the area of an incubation surface Si of the gel on which surface the liquid can be spread, the differences in height and the grooves having a height sufficient for the liquid to be able to be kept by capillarity on the aforesaid incubation surface Si of the gel.

5. Mask according to Claim 1, intended for the deposition, spreading and incubation of a single liquid, comprising a single orifice (1) crossing the mask, intended to permit the deposition, spreading and incubation of a single liquid on a gel according to an incubation surface Si of the gel.

6. Mask according to Claim 1, intended for the deposition, spreading and incubation

- of several liquids on a gel according to respective incubation surfaces $Si_1$ to $Si_n$ or
- of one liquid on a gel according to several incubation surfaces $Si_1$ to $Si_n$, n ranging from 2 to 50, this mask being such that its lower surface comprises differences in height or grooves (3), the differences in height or grooves being spaced apart from each other in order to delimit several parts of the mask $Sm_1$ to $Sm_n$, n ranging from 1 to 50, including no irregularity on their surface capable of being an obstacle to the spreading of the liquid on the surfaces $Si_1$ to $Si_n$, and whose projection on the gel is greater than or equal to the areas of the incubation surfaces $Si_1$ to $Si_n$ of the gel, on which surfaces the liquid is to be spread, the differences in height and the grooves having a height sufficient for the liquid to be able to be kept by capillarity in the aforesaid incubation surfaces $Si_1$ to $Si_n$ of the gel.

7. Mask according to any one of Claims 1 to 6, in which the deposition orifice (1) has a volume such that it is capable of constituting a reservoir having a capacity for retaining the extra liquid in order to assure spreading of the liquid on the incubation surface Si.

8. Mask according to any one of Claims 1 to 6, in which the deposition orifice (1) has an elongated shape or a circular shape.

9. Mask according to any one of Claims 1 to 6, in which the deposition orifice (1) is situated in the vicinity of the middle of the part Sm of the mask and has the shape of an elongated slit, whose dimensions are such that it cannot prevent the liquid being deposited on the incubation surface Si, this deposition orifice also being capable of assuring the function of the slit intended to permit withdrawal of the extra liquid which is spread on the surface Si.

10. Mask according to Claim 9, in which the length of

19

the deposition orifice is the length of the incubation surface Si, and its width is approximatety 1 mm to approximately 2 mm.

11. Mask according to any one of Claims 1 to 8, in which the slit (2) intended to permit withdrawal of the extra liquid is substantially parallel to the width of the incubation surface and is positioned adjacently to the edge of the incubation surface which is opposite to the vicinity of the deposition orifice (1), and the internal peripheral surface of the slit is perpendicular to the surface of the mask.

12. Mask according to Claim 11, characterized in that the width of the slit is approximately 1 mm to approximately 4 mm, in particular 2 mm, and its length is greater than or equal to the width of the surface Si.

13. Mask according to Claim 12, characterized in that the internal peripheral surface of the slit is inclined with respect to the direction perpendicular to the surface of the mask in order to permit means permitting withdrawal of extra liquid to be placed in direct contact with the said extra liquid.

14. Mask according to any one of Claims 1 to 13, in which the thickness of the mask is approximately 1 mm to approximately 20 mm, and the differences in height (3) have a height at least equal to 0.2 mm, or the grooves (3) have a width sufficient so that, during incubation, each liquid kept by capillarity between the mask and an incubation surface Si does not mix with the liquids kept in the incubation surfaces which are directly adjacent to Si.

15. Mask according to Claim 14, in which the thickness of the mask is from 2 mm to 10 mm and the differences in height (3) have a height of 0.5 mm to 20 mm and the width of the grooves is approximately 1 mm to approximately 10 mm.

16. Mask according to any one of Claims 1 to 15, comprising several mask parts Sm, each of the parts Sm comprising a deposition orifice (1), this mask comprising a single slit (2) intended to permit withdrawal of the extra liquid which is spread on the surfaces Si of the gel.

17. Mask according to Claim 16, characterized in that it comprises between 6 and 50 parts Sm, and in that the deposition orifice is situated in the part of Sm whose projection on the gel corresponds to the anodic parts of the gel, and in that the slit (2) extends perpendicularly with respect to the largest of the dimensions of the part Sm of the mask and is situated in the mask at a position such that its projection is in the cathodic region of the gel.

18. Mask according to any one of Claims 1 to 17, comprising a single part Sm, whose dimensions are greater than or equal to those of Si, and comprising in the vicinity of one of its ends an orifice (1) having an elongated shape, and also comprising in the vicinity of the other end, a slit (2) intended for withdrawing the extra liquid.

19. Mask according to Claim 18, characterized in that the length of the orifice (1) corresponds to the width of the incubation surface Si, and the length of the slit (2) is at least the width of Si.

20. Mask according to any one of Claims 1 to 19, comprising means for positioning the mask with respect to the gel such that the minimum distance between the gel and the part Sm of the mask is greater than or equal to 0.1 mm, and the value of the maximum distance is approximately 0.5 mm to approximately 2 mm.

21. Mask according to any one of Claims 1 to 9, 14, 18 or 19, characterized in that the deposition orifice (1) is also intended to permit withdrawal of the extra liquid present on the incubation surface Si of the gel.

22. Set comprising a mask according to any one of Claims 1 to 21 and a gel permitting implementation of an incubation on a gel previously subjected to electrophoresis or permitting crossed (cross-dot) reactions to be carried out.

23. Set according to Claim 22, comprising mask positioning means permitting the parts Sm of the mask to be sufficiently close to the gel for the liquid intended to be spread on the incubation surfaces Si to be kept by capillarity on the incubations surfaces Si of the gel in projection of the parts Sm of the mask and for the parts Sm of the mask to be parallel to the gel or to be inclined with respect to the gel.

24. Set according to Claim 22, characterized in that the parts Sm of the mask are inclined with respect to the gel according to an angle of approximately 0.5 to approximately 3°, for example 1.5°.

25. Set according to Claim 23 or 24, characterized in that the minimum distance between the mask and the gel is in the vicinity of the slit and the maximum distance between the mask and the gel is in the vicinity of the deposition orifice.

26. Set comprising a gel and a mask according to any one of Claims 1 to 21, characterized in that the mask is placed above the gel, the surface for deposition, spreading and incubation of the gel being in proximity to the lower face of the mask.

27. Set comprising a gel and a mask according to any one of Claims 1 to 21, characterized in that the mask is placed below the gel, the surface for deposition, spreading and incubation of the gel being in proximity to the lower face of the mask.

28. A method of deposition, spreading or incubation of one or several liquids on a gel of surface Sg according to one or several well-defined zones of the gel, hereafter designated by "incubation surface Si", characterized in that

- a mask is positioned, according to any one of Claims 1 to 21, with respect to the gel, so that the part Sm of the mask should be sufficiently close to the incubation surface Si for the liquid intended to be spread on the surface Si to be kept by capillarity on the said surface Si, and in that:
- the liquid is introduced into the deposition orifice (1) defined hereinabove,
- the mask is kept with respect to the gel in the position as indicated hereinabove, or, if the mask and the gel are parallel to each other, the mask is inclined with respect to the gel in order that the liquid should be distributed by capillarity on the surface Si, or the gel and mask set is inclined with respect to the horizontal so that the liquid should be distributed on the incubation surface Si by gravity, for a sufficient time for the reaction between the liquid and the components, in particular proteins, deposited on the gel, in particular by electrophoresis, to take place,
- at the end of the incubation, the extra liquid spread on the well-defined incubation surface of the gel is withdrawn via means arranged through the previously defined slit (2), in particular with the aid of filter paper,
- the mask is withdrawn from the gel.

29. Method according to Claim 28, in which the mask is kept parallel with respect to the gel, and the set is inclined according to a sufficient angle with respect to the horizontal for the liquid to spread by gravity on the incubation surface Si.

30. Method according to Claim 28, in which the mask is kept according to an angle sufficient with respect to the gel in order for the liquid to spread by capillarity on the incubation surface Si.

31. Method according to Claim 30, in which the mask is kept according to an angle of 0.5 to 3°, for example 1.5°, with respect to the gel, the latter being in a horizontal position.

32. Electrophoresis apparatus characterized in that it comprises a mask according to any one of Claims 1 to 21, or a set according to one of Claims 22 to 27, intended for the spreading and for the incubation of one or several reagents.

Fig. 1

Coupe C_C

Coupe D_D

1

2

C

C

D

D

Sm 1

Sm 2

Sm 6

3

Fig. 2

$Sm > Sg$
$Si = Sg$

Fig. 3 a

$Si = Sg = Sm$

Fig. 3 b

$Sm > Sg$
$Si < Sg$

Fig. 4 a

$Sm = Si < Sg$

Fig. 4 b

$Sm > Si$
$Sm < Sg$

Fig. 4 c

Fig. 5 a

Fig. 5 b

Fig. 6 a

Fig. 6 b

Fig. 6 c

Fig. 6d

Fig. 6e

Fig. 6f

Fig. 6 g

Fig. 6 h

Fig. 6 i

EP 0 526 271 B1

4 _ pompe + vanne

←→ réactif

FIGURE 7A

4 - pompe + vanne
5 - dispositif pour maintien du gel
→ réactif

FIGURE 7B

Si_1        Si_2        Si_3

4_pompe + vanne
5_dispositif pour maintien du gel
←→ réactif

FIGURE 7C

EP 0 526 271 B1

31